# EUROPÄISCHE PATENTSCHRIFT

(11) **EP 1 129 567 B1**
(45) Veröffentlichungstag und Bekanntmachung des Hinweises auf die Patenterteilung: **23.11.2005**
(21) Anmeldenummer: 99972399.2
(22) Anmeldetag: 10.09.1999
(51) Int. Cl.: H04M 1/73, H04B 1/16

(54) **VERFAHREN FÜR EINEN STROMSPARENDEN BETRIEB VON KOMMUNIKATIONSENDGERÄTEN IN EINEM INSBESONDERE DRAHTLOSEN KOMMUNIKATIONSSYSTEM**
METHOD FOR THE POWER-SAVING OPERATION OF COMMUNICATION TERMINALS IN A COMMUNICATION SYSTEM ESPECIALLY IN A WIRELESS COMMUNICATION SYSTEMS
PROCEDE POUR FAIRE FONCTIONNER AVEC UNE FAIBLE CONSOMMATION DE COURANT DES TERMINAUX DE COMMUNICATION DANS UN SYSTEME DE COMMUNICATION NOTAMMENT SANS FIL

(30) Priorität: 13.11.1998 DE 19852260; 30.12.1998 DE 19860868
(43) Veröffentlichungstag der Anmeldung: 05.09.2001
(73) Patentinhaber: ROBERT BOSCH GMBH, 70442 Stuttgart (DE)
(72) Erfinder: VOLLMER, Vasco, D-29471 Gartow (DE); RADIMIRSCH, Markus, D-30880 Laatzen (DE); SEIDEL, Guenter, D-31141 Hildesheim (DE)
(86) Internationale Anmeldenummer: PCT/DE1999/002870
(87) Internationale Veröffentlichungsnummer: WO 2000/030328

(56) Entgegenhaltungen:
- EP-A- 0 473 465
- EP-A- 0 726 508
- GB-A- 2 320 398
- BRUNINGHAUS K ET AL: "Coarse frame synchronisation for OFDM based wireless communication systems" IEEE INTERNATIONAL SYMPOSIUM ON PERSONAL, INDOOR AND MOBILE RADIO COMMUNICATIONS,XX,XX, Bd. 2, Nr. 2, 8. September 1998 (1998-09-08), Seiten 806-810-810, XP002112330 in der Anmeldung erwähnt

## Beschreibung

### Stand der Technik

Die Erfindung geht aus von einem Verfahren für einen stromsparenden Betrieb von Kommunikationsendgeräten in einem insbesondere drahtlosen Kommunikationssystem mit Paketvermittlung.

Bei der Übertragung von Paketen fester Länge zwischen Endgeräten untereinander oder in Verbindung mit einer Zentrale, die selbst ein Endgerät sein kann, wird ein gemeinsamer Übertragungskanal benutzt. Dieser stellt Übertragungskapazität zwischen den Endgeräten und der Zentrale (Uplink) sowie zwischen der Zentrale und den Endgeräten (Downlink) zur Verfügung. Ein Verfahren zum Durchführen einer solchen Paketübertragung wurde in der deutschen Patentanmeldung 197 26120.5 [1] vorgeschlagen.

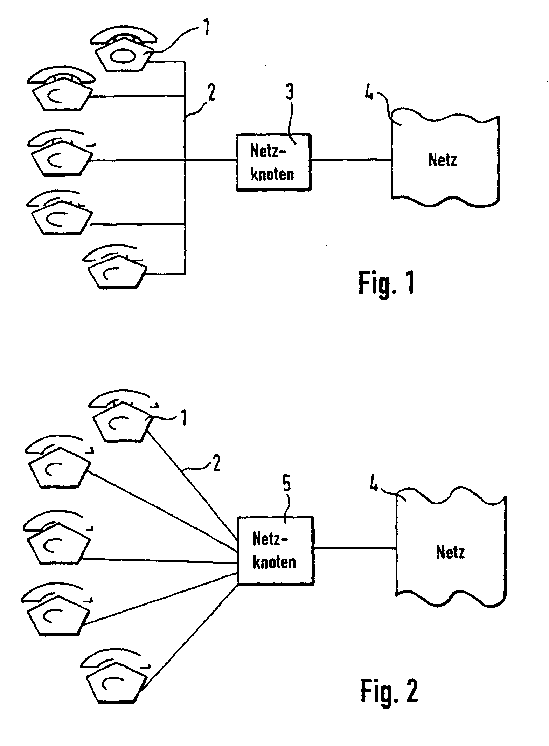

Mögliche Medien sind ein Funkkanal oder ein passives optisches Netz oder Kabelverteilnetze mit koaxialen Kabeln und/oder Glasfasern. Das Prinzip ist in Figur 1 gezeigt. An der Stelle eines Endgerätes kann sich auch ein Konzentrator mit mehreren Endgeräten befinden (Nebenstellenanlage in Besitz des Teilnehmers oder Netzwerk-Unit im Besitz des Netzbetreibers). Im folgenden wird ohne Einschränkung der Allgemeinheit von Endgeräten gesprochen. Mit 1 sind die Teilnehmer bzw. deren Endgeräte bezeichnet, mit 2 das gemeinsame Übertragungsmedium, mit 3 die Zentrale und mit 4 das Übertragungsnetz. In bekannten leitungsvermittelten Systemen, z.B. Analogtelefon, ISDN, hat jedes Endgerät einen eigenen Anschluß an einen Netzknoten, wo diese Anschlüsse auf eine oder wenige Leitungen gebündelt werden, siehe Figur 2. Das gleiche gilt für Endgeräte im ATM-Netzen (Asynchroner Transfermodus). Ein solcher Netzknoten 5 stellt im Fall von ATM einen ATM-Multiplexer dar.

Das hier vorwiegend zu betrachtende Medium ist ein Funkkanal. Aufgrund der Ungebundenheit an einen Ort ist es üblich, daß die Endgeräte z.B. Notebooks oder andere tragbare Geräte sind, die mit Batterien betrieben werden können. Daher ist der Stromverbrauch ein wichtiges Verkaufsargument für solche Geräte.

Die folgenden Ausführungen wurden für den Einsatz in ATM-Netzen entwickelt, können aber sehr wohl auch in anderen Netzen, wie z.B. IP- (Internet Protokoll) oder Ethernet-Netzen verwendet werden.

Wichtig ist, daß die Netzknoten die Unterstützung von Dienstgüte garantieren. Da Pakete verschiedener Verbindungen verschieden schnell und zuverlässig übertragen werden müssen, ist die Einführung von Bedienstrategien notwendig. Zur Durchführung einer solchen Bedienstrategie ist es notwendig, daß die Benutzung des gemeinsamen Mediums koordiniert vonstatten geht, was sich nur mit einer Zentralansteuerung bewerkstelligen läßt. Solche Medienzugriffsprotokolle (Medium Acces Control, MAC) sind bekannt, siehe z.B. [2] und [3].

In GSM werden Stromsparverfahren verwendet. Diese Verfahren sind sehr einfach einzusetzen, da GSM leitungsvermittelte Kommunikation bereitstellt. Das heißt, daß es nur die Zustände "verbunden" und "nicht verbunden" gibt. Im Zustand "verbunden" werden kontinuierlich Daten zwischen Netz und Teilnehmer ausgetauscht. Im Zustand "nicht verbunden" muß sich das Endgerät in regelmäßigen Abständen darüber informieren, welche Basisstation aktuell am besten zu empfangen ist und ob ein Ruf für ein Endgerät ankommt. Einkommende Rufe werden von allen Basisstationen in der Roaming Area ausgesandt - dieser Vorgang wird Paging genannt - und das Endgerät meldet sich bei der aktuell besten Basisstation, um den Ruf zu übernehmen. Das Endgerät meldet sich selbst so lange nicht, bis es die sogenannte Roaming Area verläßt. In diesem Fall muß es sich in der neuen Roaming Area anmelden.

Auch in HIPERLAN Typ 1 Systemen gibt es das Verfahren zum Stromsparen. Es werden ebenfalls Pakete mit variabler Länge ausgetauscht. Allerdings ist das MAC-Protokoll dezentral organisiert und jeder Teilnehmer versucht im Wettbewerb mit anderen, den Kanal zu belegen ähnlich wie das Ethernet MAC-Protokoll. Der MAC ist verbindungslos, so daß immer ein Paket erwartet werden kann. Die Adresse des Empfängers und die Länge des Pakets werden zu Beginn eines jeden Pakets versendet, so daß jeder Teilnehmer zumindest jeden dieser Paketköpfe abhören muß. Wenn er feststellt, daß das Paket nicht für ihn bestimmt ist, kann er sich für die Dauer des Pakets, die er dem Kopf entnehmen kann, schlafen legen. Dies ist relativ ineffizient, da keine längeren Schlafphasen möglich sind. Zudem muß der Kanal immer abgehört werden, auch wenn aktuell kein Verkehr auftritt (zumindest der Leistungspegel).

Aus der EP-A-0 473 465 ist eine Anordnung zum stromsparenden Betrieb eines mobilen Kommunikationsendgerätes bekannt.

Diese Anordnung enthält einen Mikroprozessor, der dazu verwendet wird, Nachrichten eines Paging-Kanals zu decodieren und festzustellen, ob die Nachricht für das Endgerät relevant ist. Falls die Nachricht nicht für das Endgerät bestimmt ist, geht es zwischen dem Empfang der Nachrichten auf dem Paging-Kanal in einen Stromsparmodus, wobei zunächst ein Zeitgeber gestartet wird, der nach Ablauf einer vorgegebenen Zeitdauer ein Signal erzeugt, woraufhin der Mikroprozessor in einen aktiven Betriebszustand übergeht und die Nachricht auf dem Paging-Kanal empfängt. Zur Erkennung der Paging-Nachricht und zur Resynchronisierung wird von der Basisstation eine Synchronisierungs-Sequenz gesendet.

Die Anordnung gemäß der EP-A-0 473 465 umfasst einen Entscheider, mittels dessen die zeitliche Synchronisation des Endgerätes in Bezug auf die von einer Zentrale empfangene Synchroninformation/Rahmensymbole steuerbar ist. Der Entscheider hat die Steuerung des Endgerätes inne, wenn das Endgerät von einem aktiven ersten Betriebszustand in einen weiteren bzw. zweiten oder dritten Betriebszustand, beispielsweise eine Bereitschafts- oder Schlafphase, übergeht. Es ist weiter eine Zeitgebereinrichtung vorgesehen, die vom Entscheider aus steuerbar ist und die Korfigieren.

### Vorteile der Erfindung

Da die Kommunikation zwischen den Endgeräten bzw. zwischen Endgeräten und Zentrale insbesondere paketvermittelt stattfindet, können stromsparenden Verfahren auch bei bestehenden Verbindungen eingesetzt werden. Durch die zentrale Steuerung ist es zudem möglich, daß ein Endgerät zur Zentrale meldet, in welcher Weise es sich schlafen legt und wann es sich wieder meldet.

Die vorliegende Erfindung beschäftigt sich mit Verfahren zum Stromsparen, die in Systemen mit zentral gesteuertem MAC eingesetzt werden können. Sie versucht, die Eigenschaften des MAC-Protokolls maximal auszunutzen und möglichst lange Zeiten zu erreichen, in denen die Aktivität der Endgeräte auf ein Minimum beschränkt werden kann. Es nützt aus, daß verschiedene stromverbrauchende Systemanteile sich sehr schnell aus- und wieder einschalten lassen, während andere Teile länger brauchen, um wieder betriebsbereit zu sein.

Die Erfindung löst auch das Problem der Synchronisation zwischen Endgerät und Zentrale. Aufgrund von Taktungenauigkeit kann es vorkommen, daß die Zeitreferenz eines Endgerätes nicht synchron zur Zentrale läuft. Daher ist eine Synchronisation zwischen beiden nötig, die nicht viel Strom verbrauchen darf.

Die Erfindung stellt ein sehr flexibles Verfahren zum Stromsparen dar, insbesondere dadurch, daß die Zeitspanne, nach der sich ein Endgerät wieder meldet, zwischen Zentrale und Endgerät frei ausgehandelt werden kann.

Diese Zeitspanne hängt davon ab, wie die Summe der Verkehrsparameter aller Verbindungen sich auswirkt. Wenn viele Verbindungen mit hohen Anforderungen an die Paketverzögerung offen sind, können diese Zeitspannen auch nur sehr kurz sein. Wenn es sich um wenige Verbindungen mit geringen Anforderungen an die Paketverzögerung handelt, sind lange Schlafzeiten möglich.

Durch die Einführung verschiedener Stufen von Schlafzuständen, die so definiert werden, daß die Einschaltzeiten verschiedener Systemkomponenten effizient genutzt werden, läßt sich die Betriebsbereitschaft der Endgeräte ohne großen Energieaufwand optimieren.

Durch die zeitliche Synchronisation zwischen den Endgeräten und der Zentrale ist eine einfache und zuverlässige Datenübertragung in einem Kommunikationssystem erzielbar. Bekannnte Verfahren sind aufgrund der nicht deterministischen Struktur des MAC-Protokolls nicht einfach zuverlässig zu implementieren oder benötigen gar den breitbandigen Empfang des Signals der Zentrale.

Ankündigungen für Empfangen und Senden werden nur von der Zentrale an ein Endgerät über einen gemeinsamen Ankündigungskanal gegeben. Daher kann ein Endgerät schon aufgrund der grundsätzlichen Struktur des MAC-Protokolls nur zu sehr begrenzten Zeiten aktiv werden, um die nötigen Informationen zu empfangen. Da die Signalverarbeitung auch im Empfangsfall recht aufwendig ist, ist der Stromverbrauch in diesem Fall nicht zu vernachlässigen. Dieser Anteil am Stromverbrauch wird bei der Erfindung dadurch minimiert, daß die zeitlichen Intervalle zwischen den einzelnen Empfangsvorgängen vergrößert werden.

### Zeichnungen

Anhand der weiteren Zeichnungen werden Ausführungsbeispiele der Erfindung näher erläutert. Es zeigen
Figur 3 die grundsätzliche Struktur eines Übertragungsrahmens, von der die Erfindung ausgeht,
Figur 4 ein Zustandsdiagramm zum Stromsparen,
Figur 5 eine Einrichtung zur Synchronisation zwischen Endgerät und Zentrale,
Figur 6 eine Beschreibung des Zustandsautomaten des Entscheiders,
Figur 7 die Grundkonfiguration eines Ausführungsbeispieles mit drei Endgeräten,
Figur 8 und Figur 9 die Übergänge zwischen den Betriebszuständen Bereitschaft und aktiv,
Figur 10 ein Endgerät im Schlafzustand,
Figur 11 ein Synchronisationssymbol,
Figur 12 ein Synchronisationssymbol mit Aufweckfunktion, Figur 13 eine Struktur für den Austausch von Aufwecknachrichten,
Figur 14 eine Aufwecksymbolfolge,
Figur 15 die Übermittlung der Aufweckzeiten,
Figur 16 die Übermittlung der Aufweckzeiten während der Assoziierung,
Figur 17 ein weiteres Zustandsdiagramm zum Stromsparen,
Figur 18 ein Diagramm zur Verlängerung der Schlafzeiten
Figur 19 Stromsparen bei Verkehr mit konstanter Datenrate,
Figur 20 ein Prinzip zur Glättung des Burstbetriebs.

### Beschreibung von Ausführungsbeispielen

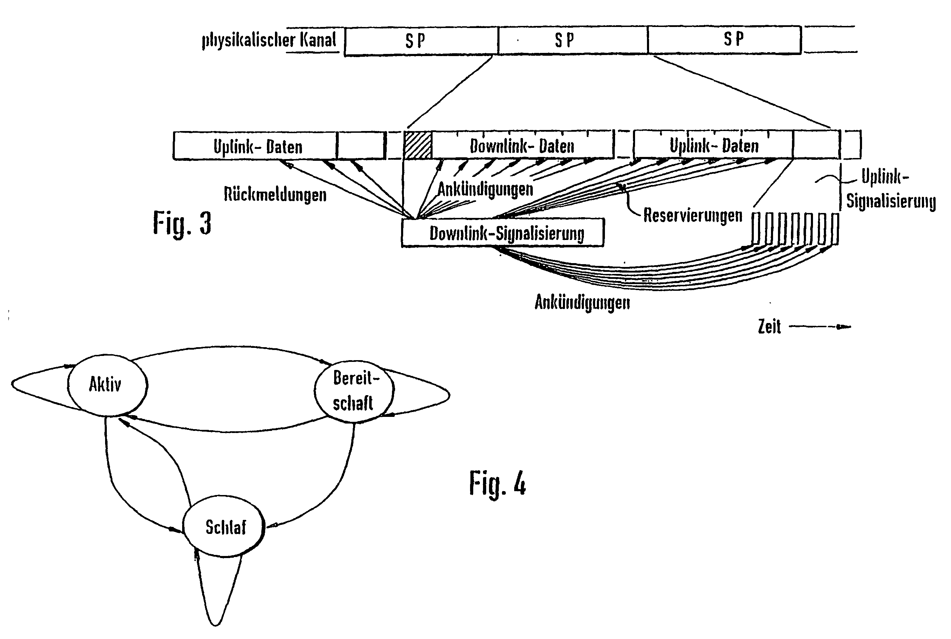

Bevor auf das eigentliche erfindungsgemäße Verfahren eingegangen wird, wird zuvor der in Figur 3 aufgezeigte Übertragungsrahmen beschrieben, von dem die Erfindung ausgeht. Das Grundprinzip des DSA-Protokolls (Dynamic Slot Assignment) ist in der deutschen Patentanmeldung P 197 26 120.5 [1] ausführlich beschrieben. Das beschriebene Verfahren läßt sich sowohl für FDD- (Frequenzduplex) als auch für TDD-Systeme (Zeitduplex) anwenden. Im folgenden wird ohne Einschränkung der Allgemeinheit angenommen, daß die Übertragung nach dem TDD (Time Division Duplex)-System erfolgt. Der physikalische Kanal ist in Zeitschlitze unterteilt, die jeweils einen Datenburst aufnehmen. Ein solcher Datenburst enthält eine ATM-Zelle einschließlich dem notwendigen Overhead für eine Trainingssequenz, Synchronisation, Vorwärtsfehlerkorrektur FEC und Schutzzeiten. Im Downlink-Signalisierungsburst teilt der zentrale Controller jedem Endgerät eine bestimmte Übertragungskapazität in Form von Zeitschlitzen für ein spezifisches Zeitintervall, SP (Signaling period) genannt, in Abhängigkeit von den Übertragungsressourcenanforderungen der Endgeräte T1, T2.. zu. Die Gesamtzahl der Schlitze eines SP ist variabel und variiert über der Zeit.

Eine Uplink-Phase besteht aus einer Anzahl von Bursts, die von den Endgeräten gesendet werden, und einer Uplink-Signalisierungsphase. Während der Uplink-Signalisierungsphase sind die Endgeräte berechtigt, Signalisierungsmeldungen an den zentralen Controller zu senden, wenn sie keine reservierten Zeitschlitze zugeteilt bekommen haben für die Übermittlung innerhalb der normalen Bursts (Pgback-Verfahren). Für die Uplink-Signalisierung ist Polling oder Random Access anwendbar. In der Downlink-Phase werden die Signalisierungs-PDU (Protocol Data Unit) und alle Bursts vom zentralen Controller zu den Endgeräten gesendet. Innerhalb einer Signalisierungs-PDU werden alle notwendigen Informationen für die nächste SP einschließlich der Signalisierungsschlitze zu den Endgeräten übertragen. Zusätzlich enthält die Signalisierungs-PDU Feedback-Meldungen für zuvor ausgesendete Uplink-Signalisierinformationen, die beispielsweise für eine Kollisionsauflösung oder Funktionen wie automatische Wiederholungsanforderung (ARQ) notwendig sind. Mit diesen Informationen wissen die Endgeräte, wann sie Bursts senden dürfen und empfangen können. Wenn unterschiedliche Arten von Bursts, z.B. kurz oder lang, benutzt werden, wird die Art der Bursts vom zentralen Controller innerhalb der Signalisierungs-PDU angekündigt.

Die Downlink-Signalisierung ist hier das zentrale Element der Betrachtung. Sie wird im folgenden Ankündigungskanal (Announcement Channel, AC) genannt. Ein weiteres wichtiges Element ist die Uplink-Signalisierung, die meist mit Anfragen (Requests) von Endgeräten an die Zentrale zu tun hat. Dieses Element wird im folgenden Rückkanal RC genannt.

Das Verfahren nach der Erfindung arbeitet verbindungsorientiert, d.h. zwischen der Zentrale und dem Endgerät muß immer mindestens eine Verbindung aufgebaut werden, über die dann kommuniziert werden kann. Die Eigenschaften der Verbindung werden beim Verbindungsaufbau ausgehandelt. So kann eine Verbindung eine konstante Datenrate haben, während andere Verbindungen "burstartig" sind, d.h. es kommt mal ganz viel, dann kommt weniger oder auch gar nichts. Die Zeiträume zwischen Bursts können recht lang sein.

Für einen Nachrichtenaustausch zwischen Endgerät und Zentrale ist es nötig, daß die Zentrale Bescheid weiß, wann ein Endgerät T1, T2... den Ankündigungskanal AC abhört, um unnötige Aussendungen zu vermeiden und zudem nicht anzunehmen, daß das Endgerät nicht mehr am Kommunikationsprozeß teilnimmt, weil es sich nicht mehr meldet. Möglichkeiten hier sind entweder fest vorgegebene, d.h. vereinbarte Zeiten oder die Mitteilung des Endgeräts, wann es wieder den Ankündigungskanal AC abhört. Auf jeden Fall muß aber die Zentrale ZE unterrichtet werden, daß das Endgerät sich in einen Schlafzustand begibt, und das Endgerät muß eine Bestätigung erhalten, daß die Zentrale ZE dies registriert hat.

Der Stromverbrauch wird in einem Endgerät einerseits durch die Signalverarbeitungsleistung, im Sendefall aber auch durch das HF-Teil bestimmt. Signalverarbeitung fällt sowohl im Sende- als auch im Empfangsfall an, während das HF-Teil einen Großteil des Stromverbrauchs beim Senden aufweist. Der Hauptteil des Stromverbrauchs des HF-Teils entsteht im Leistungsverstärker/Endverstärker. Dieser verbraucht zum einen einen Ruhestrom, der auch entsteht, wenn nichts gesendet wird, und zum anderen muß er die notwendige Sendeleistung aufbringen. Da der Ruhestrom auch dann entsteht, wenn nichts zu senden ist, bietet es sich an, den Sendeverstärker so oft auszuschalten wie möglich. Auf der anderen Seite benötigt der Sendeverstärker im allgemeinen relativ lange, bis er wieder betriebsbereit ist, und kann also nur ausgeschaltet werden, wenn die zu erwartende hohe Dauer lange genug ist. Dies betrifft auch andere Teile des Systems, z.B. Heruntertakten oder Ausblenden des Takts von digitaler Hardware, Oszillatoren im HF-Teil, etc. Daher hängt die Zeit, die ein Endgerät braucht, um wieder betriebsbereit zu sein, davon ab, welche Systemanteile ausgeschaltet wurden.

Zu diesem Zweck werden erfindungsgemäß drei Zustände definiert, die im Zustandsdiagramm in Figur 4 zu sehen sind. Der Zustand aktiv bedeutet, daß ein Endgerät bereit ist, am Kommunikationsprozeß teilzunehmen, d.h. es hört jede Ankündigung auf dem Ankündigungskanal AC, den die Zentrale ZE aussendet, ab. Die beiden Zustände Bereitschaft und Schlaf stellen verschiedene Stufen der Inaktivität dar, die sich im wesentlichen darin unterscheiden, daß im Zustand Schlaf mehr Systemkomponenten des Endgeräts ausgeschaltet werden und die Aufwachzeit länger wird, weil die Reaktivierung der einzelnen Komponenten länger dauert. Außerdem ist das Problem der zeitlichen Synchronisierung im Zustand Schlaf kritischer, da die zeitlichen Abstände zwischen abgehörten Ankündigungen auf dem Ankündigungskanal AC größer sind.

Wenn das Endgerät im Zustand aktiv ist und es die Verkehrsparameter der aufgebauten Verbindungen zulassen, kann es der Zentrale ZE mitteilen, daß es jetzt in den Zustand Bereitschaft gehen möchte und jede wievielte Ankündigung auf dem Ankündigungskanal AC es abhört. Nachdem es die Bestätigung der Zentrale ZE erhalten hat, geht es in den Zustand Bereitschaft. Wenn es beim Abhören des Ankündigungskanals AC feststellt, daß keine Nachrichten für es da sind, und selbst keine Zellen zu übertragen hat, bleibt es in diesem Zustand.

Für den Übergang in den Zustand aktiv gibt es zwei Anlässe:
1. Die Zentrale ZE teilt dem Endgerät über den Ankündigungskanal AC mit, daß sie Paket/e für das Endgerät hat, und teilt gleichzeitig mit, wann diese zu empfangen sind.
2. Das Endgerät selbst hat ein oder mehrere Pakete an die Zentrale ZE zu versenden. In diesem Fall greift das Endgerät auf den Rückkanal RC zu und gibt der Zentrale zu verstehen, daß es in den Zustand aktiv übergehen will und etwas zu übertragen hat. Im Ankündigungskanal AC bestätigt die Zentrale ZE den Zustandsübergang und teilt dem Endgerät mit, wann es senden darf.

Wenn das Endgerät längere Zeit im Zustand Bereitschaft war und die Verkehrscharakteristik der Verbindungen es erlaubt, kann es in den Zustand Schlaf übergehen. Dazu ist wiederum ein Nachrichtentausch mit der Zentrale ZE nötig, indem das Endgerät der Zentrale ZE mitteilt, jede wievielte Ankündigung auf dem Ankündigungskanal AC es abhört, und eine Bestätigung der Zentrale ZE erhalten muß. Es ist auch möglich, daß das Endgerät aus dem Zustand aktiv in den Zustand Schlaf übergeht. Auch in diesem Fall ist der zuvor geschilderte Nachrichtenaustausch zwischen Zentrale ZE und Endgerät nötig. Es gelten im wesentlichen die Mechanismen, die im Zustand Bereitschaft gelten, d.h. das Endgerät hört den Ankündigungskanal AC in regelmäßigen - größeren - Abständen ab und verbleibt im Zustand Schlaf, wenn nichts zu empfangen - oder zu versenden - ist.

Der Aufwachvorgang - Übergang in den Zustand aktiv - geht ähnlich vor sich wie aus dem Zustand Bereitschaft. Wenn das Endgerät selbst etwas zu versenden hat, aktiviert es die deaktivierten Systemkomponenten und greift auf den Rückkanal RC zu. Falls die Zentrale ZE etwas an das Endgerät senden möchte, teilt sie dies dem Endgerät in der Ankündigung auf dem Ankündigungskanal AC, von der sie weiß, daß das Endgerät empfängt, mit. Da das Endgerät im Zustand Schlaf eine längere Zeit für die Aktivierung vor allem des Sendezweiges benötigt (der Empfangszweig muß ja aktiv sein, um den Ankündigungskanal AC zu empfangen), müssen hierfür unter Umständen Mechanismen vorgesehen werden. Ein möglicher Mechanismus ist die Vereinbarung einer festen Aufwachzeit, nach der die Zentrale ZE dem Endgerät in dem Ankündigungskanal AC einfach Kapazität zuweist. Eine weitere Möglichkeit ist, daß sich das Endgerät nach dem Aufwachen im Rückkanal RC bei der Zentrale ZE zurückmeldet.

In den Zuständen Bereitschaft und Schlaf ist es wichtig, daß ein Endgerät und die Zentrale ZE zeitlich sehr genau synchronisiert sind, vor allem, wenn die Synchronisationszeitpunkte weit auseinander liegen. Dies wird vorraussichtlich im Zustand Bereitschaft nicht der Fall sein, wohl aber im Zustand Schlaf. Bei einer Taktgenauigkeit der Quarze von Zentrale ZE und Endgeräten von beispielsweise je 20 ppm kann ein maximaler Taktversatz von 40 ppm auftreten. Bei 50 ms Schlafdauer kann dies bei einem Systemtakt von 25 MHz einen Versatz um bis zu 44 Takte bedeuten und entsprechend mehr bei längeren Schlafzeiten. Da die Empfangsynchronisation im allgemeinen taktgenau erfolgen muß, ist der Aufwand für die Neusynchronisation groß und kann unter Umständen mehrere Signalisierungsperioden dauern. Nachfolgend wird aufgezeigt, wie dieses Problem erfindungsgemäß gelöst wird.

Wichtige Voraussetzung für das Verfahren ist, daß es selbst sehr wenig Strom verbraucht, d.h. daß der Signalverarbeitungsaufwand gering ist. Eine weitere Voraussetzung ist, daß die Zentrale ZE regelmäßig Synchroninformationen, d.h. "Marken" setzt, an denen sich ein Endgerät orientieren kann. Es bietet sich an, diese Marken jeweils an den Anfang der Signalisierungsperiode SP zu setzen. Die Signalisierungsperiodendauer ist konstant, während der Inhalt der Signalisierungsperiode variabel ist.

Eine solche Marke ist in [4] beschrieben. Diese Marke eignet sich sehr gut für OFDM-basierte Systeme, der Einsatz ist aber auch bei anderen Modulationsverfahren möglich. Die Realisierung der Detektion findet vorzugsweise analog statt. Eine Möglichkeit sind günstige und sehr stromsparende Begrenzungsverstärker, wie sie in DECT-Terminals Verwendung finden. Andere Detektionsverfahren sind möglich. Das wichtige an diesem Verfahren ist, daß die Detektion des Rahmensymbols unabhängig von der übrigen Signalverarbeitung stattfindet. Dadurch wird bei Vorkommen der Marke ein Ereignis ausgelöst, das zur zeitlichen Synchronisation verwendet werden kann.

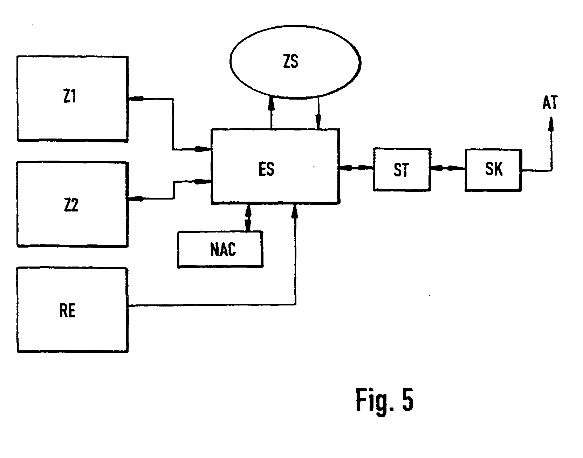

Das Verfahren nach [4] ist nicht zu 100% zuverlässig. Mit geringer Wahrscheinlichkeit kann einerseits ein Rahmensymbol detektiert werden, wenn keines aufgetreten ist, und andererseits kann es sein, daß ein Rahmensymbol aufgetreten ist, aber nicht detektiert wurde. Diese beiden Fehlerarten sind selten, können aber den Zählvorgang erheblich beeinflussen und zu Fehlern führen. Daher müssen Vorkehrungen getroffen werden, die es ermöglichen, diese Fehlerquellen zu minimieren. Dies geschieht beispielsweise durch den Einsatz eines oder mehrerer eigener Zeitgeber in Endgeräten, die mit dem Auftreten des Rahmensymbols zusammen eine nahezu perfekte Zuverlässigkeit gewährleisten. Die Zeitgeber sind hinreichend genau über eine Zeitdauer von mehreren Signalisierungsperioden. Eine mögliche Schaltung für das Endgerät T1 ist in Figur 5 gezeigt. In der Mitte sitzt der Entscheider ES, der die gesamte zeitliche Synchronisation steuert. Er ist verbunden mit der Rahmenerkennung RE und zwei Zeitgebern Z1 und Z2. Er kann die Zeitgeber Z1, Z2 einerseits einstellen und erhält andererseits nach deren Ablauf eine Nachricht.
Der Mechanismus des Entscheiders ES ist eine Zustandsmaschine, wobei deren Zustand sowie der Wert einiger Variablen im Zustandsspeicher ZS abgelegt und von dort gelesen werden können.
Ein Zähler NAC ist dem Entscheider ES zugeordnet. Der Entscheider ES ist mit der Steuerung ST verbunden, die ihrerseits mit den Systemkomponenten SK verbunden ist, an die eine Antenne AT angeschlossen ist.
Wenn das Endgerät T1 in den Schlafzustand übergeht, übergibt die Steuerung ST des Endgeräts T1 die Steuerung an den Entscheider ES gemäß Figur 5, der seinerseits die Steuerung ST des Endgeräts T1 benachrichtigt, wenn es eine Ankündigung im Ankündigungskanal AC abhören muß.

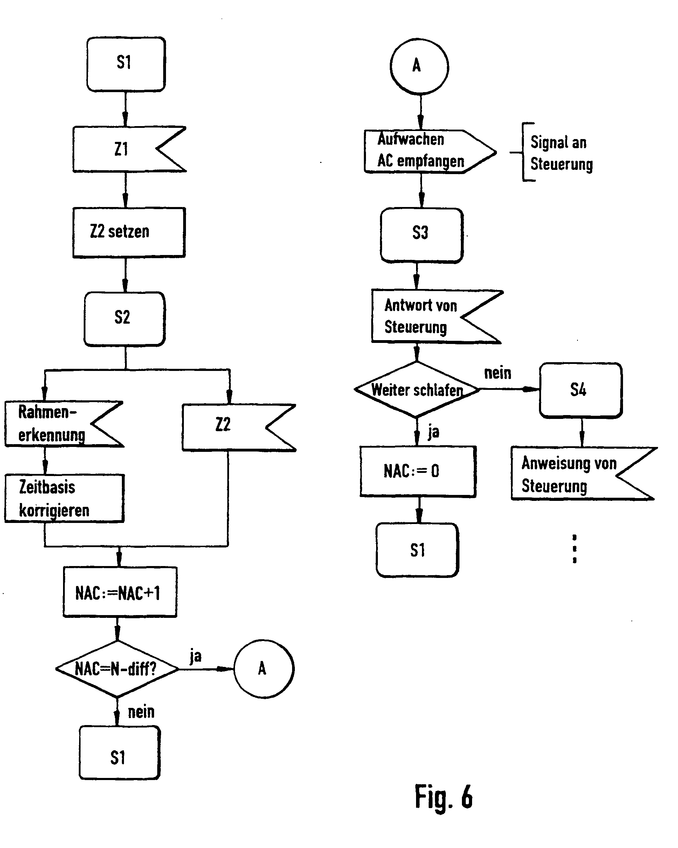

Der Ablauf des Zustandsdiagramms ist in Figur 6 gezeigt. Die verwendete Beschreibungssprache ist SDL (Standard Description Language). Wenn das Endgerät T1 sich im Schlafzustand befindet, wartet es regelmäßig im Zustand S1 auf den Ablauf des Zeitgebers Z1. Das Signal von Z1 kommt immer kurz bevor das Signal der Rahmenerkennung RE erwartet wird. Daraufhin setzt der Entscheider ES den Zeitgeber Z2 auf einen Wert, der kurz nach dem erwarteten Eintreffen des Rahmensignals liegt, und geht dann über in den Zustand S2. Durch diesen Mechanismus wird ein zeitliches Fenster geöffnet, in dem das Rahmensymbol erwartet wird, und somit falsch detektierte Rahmensymbole ausgeblendet.

Im Zustand S2 erwartet der Entscheider ES entweder ein Signal von der Rahmenerkennung RE oder vom Zeitgeber Z2. Wenn das Signal der Rahmenerkennung RE kommt, wird es benutzt, um die Zeitbasis des Endgeräts T1 zu korrigieren. Diese Korrektur setzt den tatsächlichen Zeitpunkt des Rahmensignals mit dem erwarteten Zeitpunkt in Beziehung. Eine höhere Genauigkeit dieser Korrektur kann durch eine zeitliche Mittelung über das Auftreten mehrerer Rahmensymbole erreicht werden. Falls das Rahmensignal nicht detektiert wird, weil die Detektion der Rahmenerkennung RE nicht absolut zuverlässig ist, wird das Signal des Zeitgebers Z2 ausgewertet und somit der Takt des Zeitgebers Z2 als Synchroninformation benutzt. Dies stellt sicher, daß jede Signalisierungsperiode mitgezählt wird.

Anschließend wird der Zähler NAC, der das Auftreten der Ankündigungen im Ankündigungskanal AC zählt, um eins erhöht und geprüft, ob er mit dem Wert übereinstimmt, zu dem das Endgerät T1 die entsprechende Ankündigung auf dem Ankündigungskanal AC abhören muß. Eine Differenz wird eingeführt, um sicherzustellen, daß das Endgerät genügend Zeit hat, für den Empfang des Ankündigungskanals AC benötigte Systemkomponenten zu aktivieren. Falls dieser Wert noch nicht erreicht ist, geht der Entscheider ES wieder in den Zustand S1 über.

Falls der Wert erreicht ist, gibt der Entscheider ES ein Signal an die Steuerung ST des Endgerätes T1 mit der Anweisung, die besagte Ankündigung auf dem Ankündigungskanal AC zu empfangen und auszuwerten. Falls die Auswertung ergibt, daß das Endgerät T1 weiterschlafen kann, wird der Zähler NAC für das Auftreten der Ankündigungen zurückgesetzt, und das Endgerät T1 geht in den Zustand S1 über. Falls es nicht weiterschlafen soll, geht der Entscheider ES in Zustand S4 und wartet darauf, daß die Steuerung die Anweisung gibt, wieder in den Schlafzustand zu gehen. Die an S4 anschließenden weiteren Aktionen sind nicht näher ausgeführt.

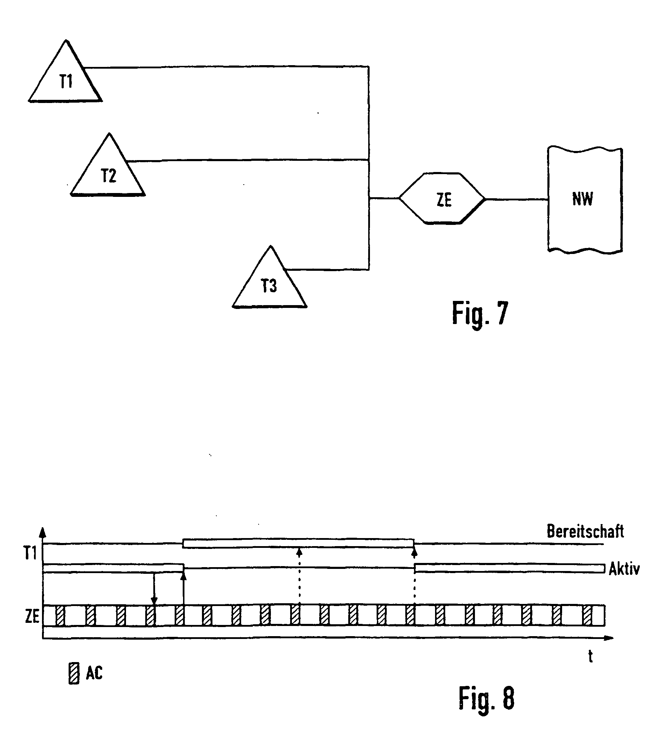

Die Grundkonfiguration des folgenden Ausführungsbeispiels ist in Figur 7 gezeigt. Die Endgeräte T1, T2 und T3 sind asoziiert mit der Zentrale ZE und kommunizieren mit ihr beispielsweise über einen gemeinsamen Funkkanal. Die Zentrale ZE ist in diesem Fall an ein Netzwerk NW angeschlossen, was aber nicht zwingend der Fall sein muß.

Zunächst befinden sich alle Endgeräte im Zustand aktiv. Nach einiger Zeit beschließt das Endgerät T1, daß es sich in den Zustand Bereitschaft begeben möchte und jede vierte Ankündigung des Ankündigungskanals AC abhören wird, und teilt dies der Zentrale ZE mit, vgl. Figur 8. Die Zentrale ZE gibt die Bestätigung zurück an Endgerät T1, und Endgerät T1 geht in den Zustand Bereitschaft. Nun hört Endgerät T1 jede vierte Ankündigung des Ankündigungskanals AC der Zentrale ZE ab. Beim zweiten Abhören erhält Endgerät T1 die Nachricht, daß eine Nachricht zu empfangen ist. Endgerät T1 geht in Zustand aktiv und kommuniziert normal mit der Zentrale ZE.

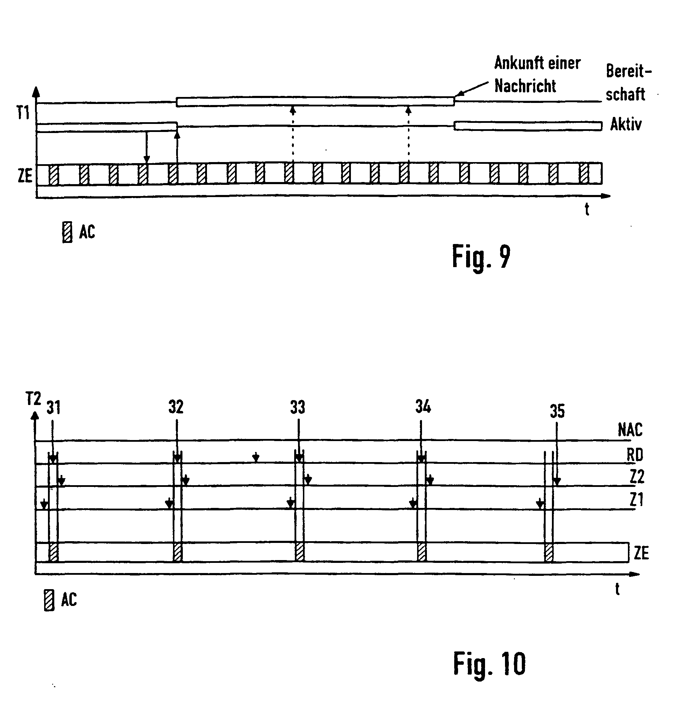

Endgerät T1 geht nun wieder in den Zustand Bereitschaft, siehe Figur 9. Dieses Mal wird der Übergang zurück in den Zustand aktiv durch eine Nachricht ausgelöst, die Endgerät T1 an die Zentrale ZE übertragen muß.

Nun beschließt Endgerät T2 in den Zustand Schlaf zu gehen und teilt der Zentrale ZE mit, daß es jede fünfzigste Ankündigung auf dem Ankündigungskanal AC abhören wird. Die Bekanntgabe und Bestätigung erfolgen wie zuvor erläutert, so daß sich Endgerät T2 nun im Zustand Schlaf befindet. Ein Ausschnitt aus den Vorgängen ist in Figur 10 gezeigt. Unten ist die Aussendung der Zentrale ZE mit den Ankündigungen im Ankündigungskanal AC zu sehen. Die Linien darüber zeigen die Situation aus Sicht des Entscheiders ES im Endgerät, nämlich die Ereignisse der Rahmendetektion und der Zeitgeber. Ganz oben ist der aktuelle Wert des Zählers NAC für die Ankündigungen im Ankündigungskanal AC angegeben. Kurz vor dem Auftreten einer Ankündigung springt Zeitgeber Z1 an und öffnet ein Fenster, innerhalb dessen die Rahmendetektion wahrgenommen werden kann und das durch den Zeitgeber Z2 wieder geschlossen wird. In den vier ersten dargestellten Fällen wird die Erhöhung von NAC um eins durch die Detektion des Rahmensymbols ausgelöst. In der Periode, in der NAC = 33 ist, wird irrtümlicherweise ein Rahmensymbol detektiert, was aber keine Auswirkungen hat. Beim Übergang von NAC = 34 auf NAC = 35 wird das Rahmensymbol nicht detektiert. Daher wird die Erhöhung durch den Zeitgeber Z2 ausgelöst.

Da es möglich ist, daß ein Endgerät sich verzählt hat und daher die falsche Ankündigung im Ankündigungskanal AC abhört, ist es sinnvoll, daß die Zentrale ZE die Ankündigung, von der sie weiß, daß das Endgerät sie abhört, auf jeden Fall eine Nachricht für eben dieses Endgerät versendet. Wenn keine Pakete für das Endgerät warten, wird dem Endgerät nur mitgeteilt, daß dies die richtige Ankündigung war und keine Nachrichten warten. Wenn das Endgerät beim Abhören des Ankündigungskanals feststellt, daß es sich verzählt hat, muß es kurzzeitig in den Zustand aktiv gehen, sich bei der Zentrale ZE melden - durch Zugriff auf den Rückkanal RC - und sich zeitlich neu auf die Zentrale ZE synchronisieren. Anschließend kann es sich wieder in den Schlafzustand begeben.

Um die Auswirkungen des Verzählens zu mildern, ist es unter Umständen sinnvoll, daß das Endgerät im Schlafzustand immer mindestens drei oder mehr aufeinanderfolgende Ankündigungen im Ankündigungskanal AC abhört - beispielsweise die Ankündigung, die es meint abhören zu müssen, sowie die Ankündigung davor und die Ankündigung danach. Falls in keinem der Ankündigungen eine Benachrichtigung des Endgerätes vorkommt, hat es sich verzählt und muß sich bei der Zentrale ZE melden, um sich zeitlich neu zu synchronisieren.

Nachfolgend werden weitere Alternativen beschrieben:
- Das Rahmensymbol muß nicht wie bisher beschrieben am Anfang der Signalisierungsperiode SP vorkommen, sondern kann vielmehr irgendwo innerhalb der Signalisierungsperiode SP positioniert sein,
- die Detektion des Rahmenbeginns muß nicht zwingend wie zuvor erfolgen,
- es ist nicht zwingend notwendig, jede Ankündigung im Ankündigungskanal AC mitzuzählen, da das Auseinanderlaufen des Taktes in der Zentrale ZE und des Endgerätes nicht sehr schnell vor sich geht,-wenn ein Endgerät in einem der Zustände Bereitschaftoder Schlaf ist und von der Zentrale ZE aufgeweckt werden soll, ist es auch möglich, daß dieses Aufwecken durch Versenden einer 1-bit Information geschieht statt durch das Abhören des Ankündigungskanals AC durch das Endgerät. Dies ist zum Beispiel mit einer Marke ähnlich der Marke, die zum Zählen der Signalisierungsperioden SP verwendet wird, möglich. Wesentlich dabei ist, daß auch diese Marke sich leicht und zuverlässig detektieren läßt. Desweiteren ist wichtig, daß sich diese zweite Marke von der ersten Marke zum Zählen der Signalisierungsperioden SP in der Form unterscheidet, daß sie bei der Detektion nicht verwechselt werden können. Falls mehrere Endgeräte zu diesem Zeitpunkt feststellen sollen, ob sie in den Zustand Aktiv übergehen sollen, wird das Auftreten der zweiten Marke so interpretiert, daß mindestens eines der Endgeräte, die aktuell betroffen sind, aufwachen soll.

Nachfolgend werden noch weitere Alternativen bzw. Ausgestaltungen des erfindungsgemäßen Verfahrens beschrieben.

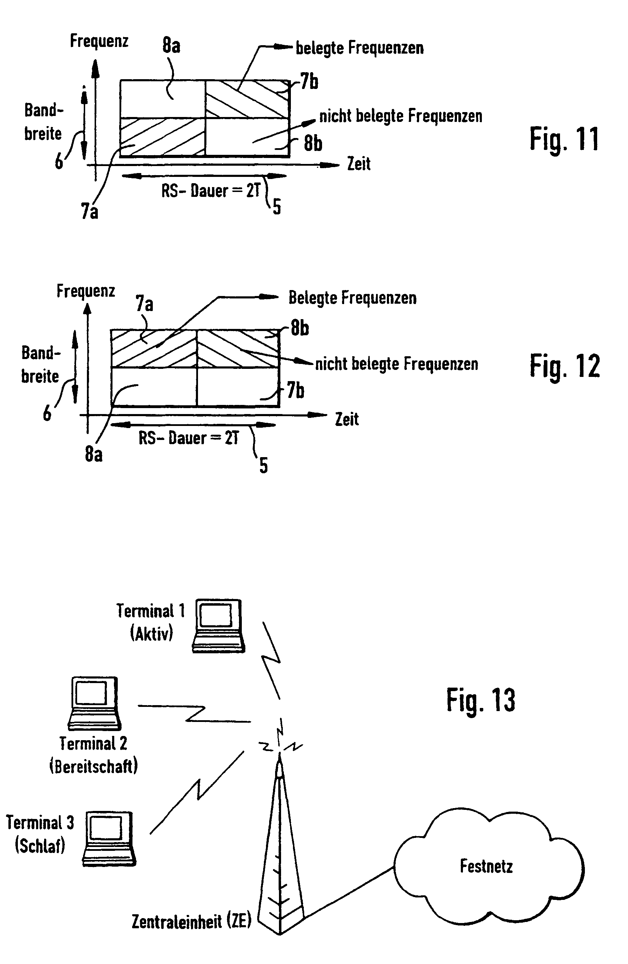

Bisher wurde davon ausgegangen, daß die Zentrale ZE jeweils bis zum Erreichen desjenigen Übertragungsrahmens wartet, in dem das betreffende Endgerät zuhört, um Daten zu übertragen. Diese Vorgehensweise limitiert entweder die Schlafdauer oder führt zu langen Wartezeiten, wenn die Zentrale ZE außer der Reihe übertragen möchte. Um dies zu verhindern, wird nachfolgend ein Signal beschrieben, das von einem Endgerät jederzeit detektierbar ist. Dazu wird ein spezielles Synchronisationssignal/Rahmensymbol verwendet, welches neben seiner Synchronisationsfunktion auch in der Lage ist, eine Nachricht - insbesondere eine 1 Bit-Information - an alle Endgeräte zu senden. Wie Fig. 11 zeigt, wird in einer ersten Hälfte der Zeit 5 für die Rahmensynchronisation die eine Hälfte der Bandbreite 6 mit einem Signal 7a belegt und die andere Hälfte der Bandbreite mit keinem Signal 8a. In einer zweiten Hälfte der Zeit 5 wird die andere Hälfte der Bandbreite 6 mit einem Signal 7b belegt und die eine Hälfte mit keinem Signal 8b. Ein derartiges Rahmensynchronisationssignal kann durch eine einfache analoge Schaltung, beispielsweise bestehend aus Filtern, die auf die jeweiligen Bandbreitenhälften abgestimmt sind, mit nachfolgender Bewertungsschaltung detektiert werden. Dies spart im Vergleich zur digitalen Signalverarbeitung viel Strom, da ein Teil oder die ganze Vorrichtung zur digitalen Signalverarbeitung ausgeschaltet werden kann.

Zur Informationsübertragung wird dieses Signal, wie Fig. 12 zeigt, einfach invertiert. Jede Signalinversion der Synchroninformation/des Rahmensymbols wird erfindungsgemäß als Aufwecksymbol insbesodere für alle schlafenden Endgeräte verwendet, was aber nicht nur für alle schlafenden Endgeräte sondern auch für andere Endgeräte von Bedeutung sein kann. Die Erkennung des Rahmensynchronisationssymbols funtioniert bereits bei schlechteren Übertragungsbedingungen (Signal-Störabstand), als sie für die Demodulation des Datenstromes notwendig sind. Im normalen Betrieb wird das in Fig. 11 gezeigte Symbol gesendet. Für den Fall, daß die Zentrale ZE eine Nachricht an ein oder mehrere insbesondere schlafende Endgeräte senden möchte, aber dies nicht auf dem bisher beschriebenen Wege über die periodischen aktiven Rahmen geschehen soll, wird ein anderes Rahmensynchronisationssymbol gemäß Fig. 12 gesendet. Es müssen dabei von allen Endgeräten beide Symbolarten durch entsprechende Detektionseinrichtungen ausgewertet werden können, um sowohl eine normale Synchronisierung als auch die Detektion des Aufwecksymbols zuverlässig zu gewährleisten. Bei Auftreten des normalen Symbols ändert sich zu dem zuvor beschriebenen Verfahren nichts. Bei Auftreten jedes neuen Aufwecksymbols gehen jedoch alle Endgeräte vom Schlaf- oder Bereitschaftsmodus in den Aktivmodus über und werten einen der folgenden Rahmen aus, um den Grund zu erfahren, warum sie aufgeweckt wurden.

Damit die Zentrale weiß, wann sie die Endgeräte nach dem Aufwecksymbol ansprechen kann, muß das Endgerät bei der Assoziierung, also beim Anmelden des Endgerätes bei der Zentrale ZE oder bei der Anforderung des Schlafmodus übertragen, nach welcher Zeitspannne es wieder im Aktivmodus ist. Diese Zeitspanne variiert sehr stark in Abhängigkeit davon, welche Komponenten des Endgeräts abgeschaltet waren.

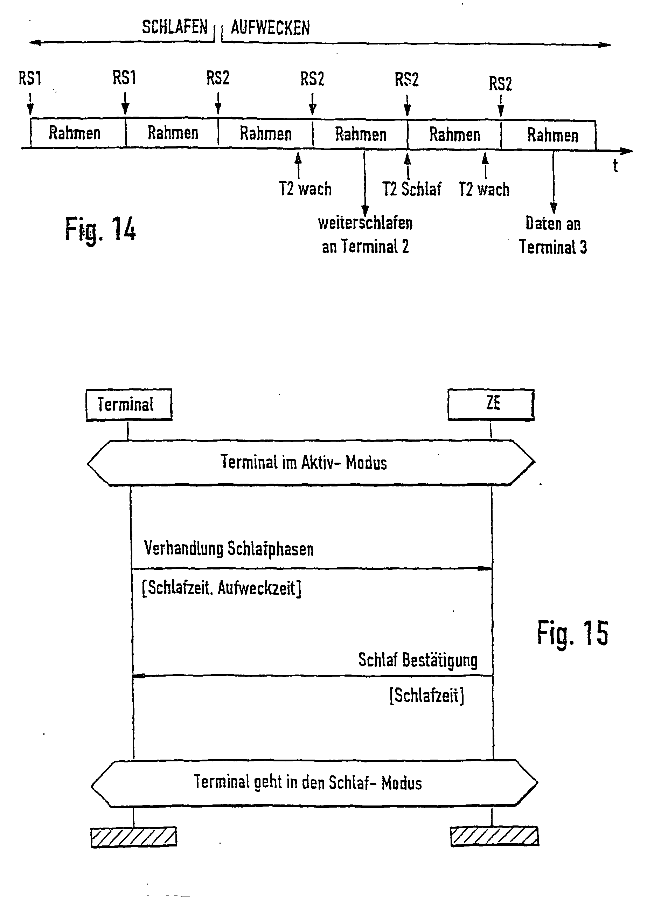

Fig. 13 zeigt hierzu ein Ausführungsbeispiel. Die Endgeräte T2 und T3 sollen sich in einem Stromsparmodus befinden, während Endgerät T1 aktiv ist. Wenn jetzt die Zentrale ZE eine Nachricht für Terminal T3 hat, die nicht warten kann, bis dieses Endgerät wieder einen Rahmen abhört, sendet die Zentrale ZE ein Aufwecksymbol als Synchronisationssymbol. Daraufhin gehen die Endgeräte T2 und T3 in den Aktivmodus. Dieser Vorgang dauert im Endgerät T2 kürzer als im Endgerät T3, da im Endgerät T3 mehr Komponenten abgeschaltet waren oder die Aufweckzeit durch die herstellerspezifische Implementierung länger ist. Da bei längeren Schlafzeiten insbesondere diejenigen Komponenten deaktiviert werden, die sehr lange brauchen, um wieder aktiv zu sein, kann dieser Zeitunterschied erheblich sein. Damit die Zentrale ZE weiß, in welchem folgenden Rahmen es die Information für Endgerät T3 senden kann, muß dieses vorher mitteilen, welche Aufweckzeiten, d.h. Reaktivierungszeiten es benötigt. Sobald Endgerät T2 nach der Aufwecknachricht empfangsbereit ist, sendet die Zentrale ZE eine Nachricht, daß das Endgerät T2 weiterschlafen kann, da die daten nur Endgerät 3 betreffen. Sobald Endgerät T3 bereit ist und sich ebenfalls gemeldet hat, sendet die Zentrale ZE die zu übertragenden Daten. Das Endgerät T3 befindet sich jetzt im Zustand aktiv. Wenn nach einiger Zeit keine Daten mehr von oder zum Endgerät übertragen werden müssen, kann es eine erneute Schlafanfrage an die Zentrale ZE senden. Fig. 14 zeigt die Aufwecksymbolfolge mit den unterschiedlichen Rahmensynchronisationssymbolen RS1 und RS2. RS1 stellt hierbei das Synchronisationssymbol gemäß Fig. 11 dar und RS2 das Synchronisationssymbol gemäß Fig. 12.

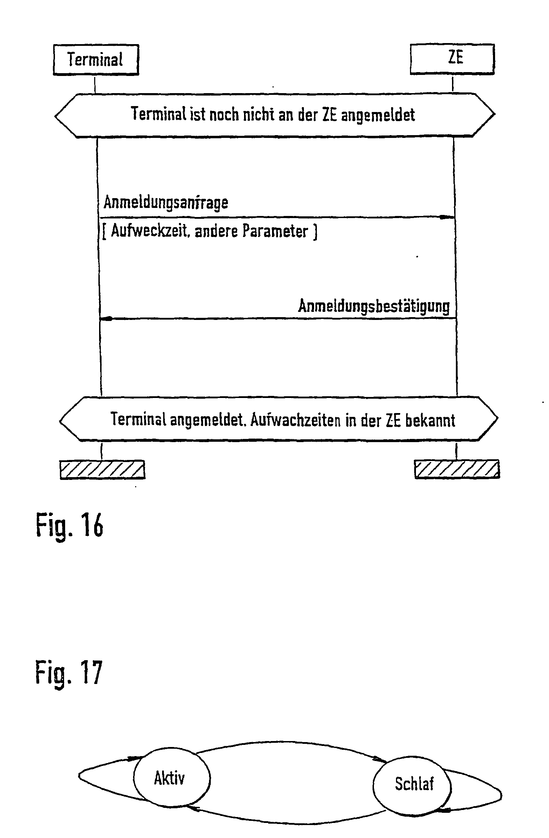

Am einfachsten ist es die Aufweckzeiten (wake up time) während der Verhandlung über die Schlafphasen (sleep request) zu übertragen. Dies ist in Fig. 15 dargestellt. Ein Endgerät ist hier mit "Terminal" bezeichnet. Ein Terminal sendet bei der Schlaf-Anforderung die Zeit mit, die es benötigt, um aus dieser Schlaftiefe zu regenerieren (Aufweckzeit). Möglich ist auch eine Übertragung der zum Aufwachen benötigten Zeit (Aufweckzeit) während der Assoziierung des Terminals. Dies ist in Fig. 16 dargestellt. Möglich ist auch diese Aufweckzeiten in Abhängigkeit der Länge der Schlafphasen als Systemparameter festzuschreiben. Eine weitere Möglichkeit besteht darin, diese Länge der Schlafphasen nicht zu übertragen, sondern festzulegen, daß ein Endgerät (Terminal) über einen Random Access Channel (wahlfreien Zugriffskanal) zugreift, sobald es bereit ist. Wenn das Aufwecksignal grundsätzlich die einzige Methode ist, schlafende Endgeräte aufzuwecken, ist eine Übertragung der Länge der Schlafphasen nicht unbedingt erforderlich. In diesem Fall wird ein Aufwecksymbol gesendet, wenn Daten für ein Endgerät vorliegen. Das Endgerät (Terminal) kann seinerseits über den Kanal mit wahlfreiem Zugriff (Uplink-Signalisierungskanal) Übertragungskapazität anfordern (Fig. 14). Es ist vorteilhaft, nicht ein Aufwecksymbol zwischen den Rahmensymbolen zu senden, sondern die beiden Symbole jeweils zu alternieren. D.h. zunächst wird gemäß Fig. 14 das Rahmensynchronisationssymbol RS1 gesendet, dann zum Aufwecken auf das Rahmensynchronisationssymbol RS2 gewechselt, bis der nächste Aufweckvorgang wieder mit dem Rahmensynchronisationssymbol RS1 eingeleitet wird. Das hat den Vorteil, daß auch diejenigen Terminals aufwachen, die ein Rahmensynchronisationssymbol nicht oder fehlerhaft detektiert haben.

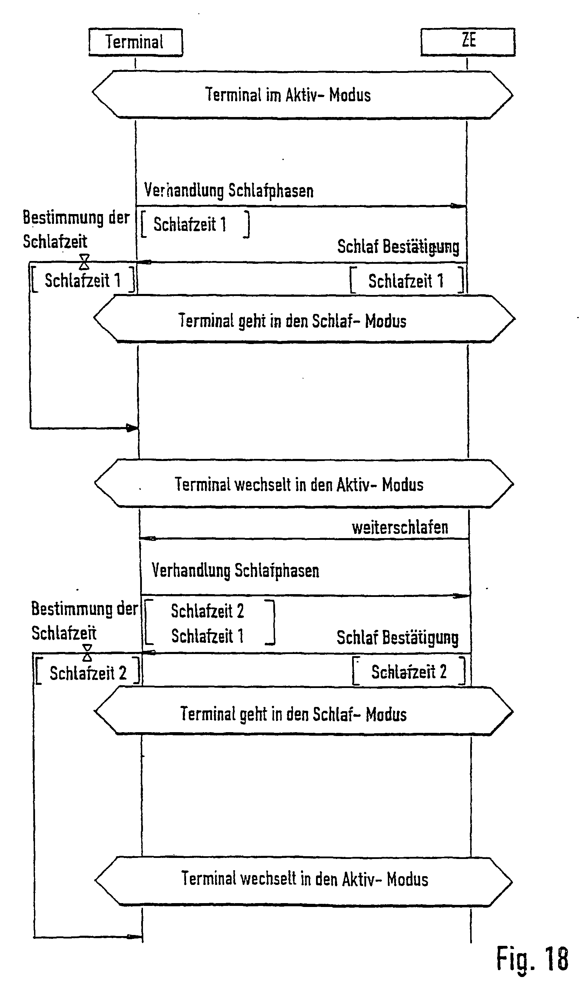

Bisher wurde von drei verschiedenen Betriebszuständen: Aktivphase, Bereitschaftsphase und Schlafphase ausgegangen. Es ist auch möglich wie die Fig. 17 zeigt nur zwei Betriebszustände zu definieren, nämlich eine Aktivphase und eine Schlafphase, in der die Bereitschafts- und Schlafphasen zusammengeführt sind. Dazu kann die Zeit für die ein Endgerät schläft bis es wieder einen Broadcast Channel abhört über der Zeit verändert werden. Dadurch ist es möglich die Schlafphasen dynamisch an das Nutzerverhalten anzupassen oder in Abhängigkeit von Nutzervorgaben einzustellen. Ein Endgerät kann dadurch jeweils so lange schlafen, wie es dies aufgrund seiner aktuellen Parameter für sinnvoll hält. Diese Parameter sind in erster Linie die Parameter der Verbindungen, die das Endgerät hält, wie z.B. die Datenrate, die maximal zulässige Verzögerung oder die Zwischenankunftszeit zwischen Datenpaketen. Der Nutzer kann durch manuelle Konfiguration insbesondere zugunsten längerer Batterielebensdauer die Dauer der Schlafphasen heraufsetzen, nimmt dann aber größere Verzögerungen in der Datenübertragung in Kauf. Eine sukzessive Verlängerung der Dauer der Schlafphasen ist dann sinnvoll, wenn das Nutzerverhalten einen Rückschluß darauf zuläßt, insbesondere wenn das Endgerät z.B. nur noch sporadisch benutzt wird oder schon längere Zeit nicht benutzt wurde. Wie Fig. 18 zeigt, sind insbesondere zwei Sleep Timer für unterschiedliche Schlafphasen - Sleep Time 1 und Sleep Time 2 - vorgesehen. Ein Terminal sendet dazu eine neue Schlafanforderung (Sleep request), nachdem die Zentrale ZE die Fortsetzung des Schlafmodus bestätigt hat (Continue sleep). Unter einer sukzessiven Verlängerung soll auch der Fall verstanden werden, daß die Schlafphasen zuerst geringfügig reduziert werden, um dann anschließend umso mehr erhöht zu werden, z.B. von einer Dauer von 10 Rahmen zunächst auf 9 und anschließend auf 30. Wichtig in diesem Zusammenhang ist, daß der Verlauf der Schlafphasen über der Zeit in Summe eine Erhöhung aufweist.

Als Parameter, die von dem Terminal selbst gesetzt werden und bei der Ermittlung der optimalen Schlafphasen eine Rolle spielen, kann der Batteriestatus genannt werden: längere Schlafphasen, aber dadurch schlechtere Qualität, wie längere Wartezeiten auf Übertragung oder beim Verbindungsaufbau bei nachlassender Batteriekapazität.

Als Beispiele kann von einem Terminal ausgegangen werden, das wie in Fig. 13 bei einer Zentrale ZE angemeldet ist. An diesem Terminal arbeitet ein Nutzer, der insbesondere WWW-Applikationen, wie z.B. Netscape oder Internet Explorer benutzt. Diese Applikationen haben die Eigenschaft, einen stark burstartigen, d.h. schwankenden Datenstrom zu erzeugen. Außerdem hat das Verhalten des Nutzers einen starken Einfluß au die zu übertragende Datenmenge: bei Aufruf einer neuen Webseite werden kurz viele Daten übertragen, beim Lesen dieser Seite dann für längere Zeit keine mehr. Bei diesen Applikationen kann zudem, anders als bei Echtzeitanwendungen wie Sprache, Video, die maximal zulässige Verzögerung recht hoch gewählt werden. Dadurch kann dieses Terminal häufig zwischen den Aktivitäten des Nutzers (Anklicken eines Links) in relativ lange Schlafphasen übergehen. Wenn jetzt dieser Nutzer das Terminal längere Zeit verläßt, kann die Dauer der Schlafphase langsam erhöht werden. Dies führt dazu, daß immer mehr Komponenten des Terminals abgeschaltet werden können.

Bei diesem Terminal läßt jetzt die Batteriekapazität nach. Daraufhin setzt das Terminal die Dauer der Schlafphasen herauf und verlängert dadurch die Funktionszeit auf Kosten der Übertragungsqualität. Dies kann auch dann passieren, wenn ein Nutzer das Terminal benutzt.

Eine weitere Möglichkeit ist die Kombination der Verfahren. Das heißt, sowohl das Nutzerverhalten als auch die Parameter der aktiven Verbindungen wie auch der Batteriezustand werden in die Ermittlung der Dauer der Schlafphasen einbezogen.

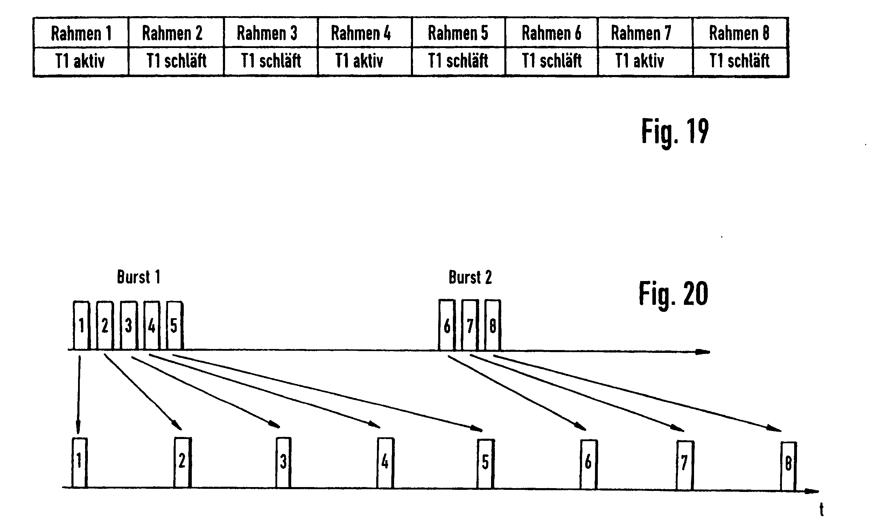

Es gibt auch Datenverkehr, der nicht wie zuvor beschrieben burstartig, d.h. schwankend ist, sondern seine Daten mit großer Regelmäßigkeit sendet, z.B. Sprache. Diese entspricht der Diensteklasse CBR (Constant Bitrate) bei ATM (Asynchronous Transfer Mode). Für die weitere Beschreibung erfindungsgemäßer Lösungen wird die Bezeichnung dieser Diensteklasse beibehalten, ohne jedoch eine Einschränkung auf ATM vorauszusetzen. Da bei konstanter Bitrate sowohl das Terminal als auch die Zentrale ZE die Verkehrsparameter der bestehenden Verbindung kennen, ist hier eine Signalisierung für einen Stromsparbetrieb nicht mehr regelmäßig notwendig. Ein Terminal T1 überträgt dabei nur einmal, daß es zwischen den Übertragungen schläft und deshalb in dieser Zeit nicht für eine außerplanmäßige Übertragung zur Verfügung steht. Das Terminal T1 kennt den Rahmen, in dem die nächste Übertragung stattfindet, siehe Fig. 19. Dabei geht das Terminal T1 ohne Signalisierung in den Schlafmodus. Bei anderen Verkehrsarten muß das Terminal T1 vorher aufgeweckt werden. Wie Fig. 19 zeigt, geht das Terminal T1 rechtzeitig vor einem Rahmen, in dem eine Übertragung stattfindet - in Fig. 18 in den Rahmen 1, 4 und 7... - in den Aktivmodus über, um die Daten zu empfangen und schläft anschließend wieder ein. Da letztgenanntes Verfahren den notwendigen Signalisierungsaufwand stark reduziert, kann es nützlich sein auch Nicht-CBR-Verkehr, soweit es seine Verkehrsparameter zulassen, zu glätten, d.h. einen Burst (große, in kurzer Zeit auftretende Datenmenge) über der Zeit zu verteilen. Dies ist in Fig. 20 dargestellt. Dadurch ist es möglich das Verfahren mit reduziertem Signalisierungsaufwand auch für andere Diensteklassen wie VBR, ABR zu zu verwenden. Auch hier ist die Verwendung von ATM nicht zwingend.

In einem Szenario wie unter Fig. 13 beschrieben, in dem viele Terminals an eine Zentrale ZE angeschlossen sind, jetzt nicht unbedingt im Schlafmodus, ist es vorteilhaft eine Möglichkeit zu haben, die Terminals in verschiedene Kategorien einzuteilen.

Dazu wird das Verfahren genutzt, das für das Stromsparen bereits vorhanden ist. Allerdings wird eine Schlaf-Bestätigung von der Zentrale ZE nur an diejenigen Terminals gesendet, die zusammengefasst werden. In dieser Nachricht teilt die Zentrale ZE mit, jeden wievielten Rahmen ein Terminal den Übertragungsrahmen abhören soll. Dadurch ist eine Aufteilung der zur Verfügung stehenden Datenrate auf viele Terminals möglich.

Außerdem kann ein Terminal mit einer leicht modifizierten Schlaf- Anordnung mitteilen, daß es nur jeden n-ten Rahmen abhört. Dadurch verringert sich für dieses Terminal die Dienstgüte, dafür ist es aber möglich, diesem Terminal den Zugang günstiger anzubieten. Auch der Stromverbrauch des Terminals sinkt durch die häufigen Schlafzeiten. Als Ausführungsbeispiel sei ein Szenario wie unter Fig. 13 beschrieben angenommen mit vielen IP(Internet Protokoll)-Terminals. Diese haben die Eigenschaft, daß sie keine Dienstgüte verlangen und unterstützen. IP in der derzeit gebräuchlichen Version unterstützt ausschließlich "Best-Effort", d.h. Übertragung so gut wie möglich. Diese Terminals versuchen also Daten so schnell wie möglich zu senden. Da bei Funksystemen die Bandbreite stark limitiert ist, können diese Terminals (Endgeräte) in Cluster aufgeteilt werden, die nur jeweils alle N Rahmen Zugriff auf den Funkkanal erhalten, z.B. Terminal 1 im Rahmen 1, Terminal 2 in Rahmen 2,... Dadurch wird der entstehende Verkehr stark geglättet und der Gesamtdurchsatz erhöht.

Literatur:
[1] Deutsche Patentanmeldung 197 26 120.5,
[2] D. Petras, A. Krämling "MAC protocol with polling and fast collision resolution for an ATM air interface", IEEE ATM Workshop, San Fransico, CA, August 1996,
[3] D. Petras, A. Krämling, A. Hettich, "MAC protocol for Wireless ATM: contention free versus contention based transmission of reservation requests", PIMRC'96, Teipei, Taiwan, October 1996,
[4] K. Brüninghaus, M.Radimirsch, "Coarse Frame Synchronisation for OFDM based Wireless Communication Systems", PIMRC'98, Boston, USA, September 1998

## Patentansprüche

1. Verfahren für einen stromsparenden Betrieb von Kommunikationsendgeräten in einem insbesondere drahtlosen Kommunikationssystem mit Paketvermittlung mit einer Zentrale (ZE), die selbst ein Endgerät sein kann und die in einem rahmenstrukturierten Ankündigungskanal (AC) Mitteilungen für die Endgeräte (T1, T2, ...) aussendet und in einem Rückkanal (RC) Mitteilungen der Endgeräte (T1, T2,...) empfängt, mit folgenden Schritten:
- den Endgeräten (T1, T2,...) werden mindestens zwei Betriebszustände zugeordnet, wobei ein erster Betriebszustand eine Aktivphase definiert, in welcher ein Endgerät (T1, T2,...) jede Ankündigung im Ankündigungskanal (AC) abhört, und wobei ein weiterer Betriebszustand eine Schlafphase definiert, in der der Ankündigungskanal (AC) nur in Abständen abgehört wird,
- zu Synchronisationszwecken der Endgeräte (T1, T2,...) werden Synchroninformationen wie z.B. Rahmensymbole durch die Zentrale (ZE) ausgesendet,
- - von den Endgeräten (T1, T2,...) werden die Synchroninformationen/Rahmensymbole zumindest in Zeitabständen auch im weiteren bzw. den weiteren Betriebszustand/-zuständen zur Korrektur ihrer Zeitbasis ausgewertet.

2. Verfahren nach Anspruch 1, **dadurch gekennzeichnet, daß** ein zweiter Betriebszustand eine Bereitschaftsphase definiert, in der der Ankündigungskanal (AC) periodisch in zuvor festgelegten Zeitfenstern abgehört wird, wobei einige Systemkomponenten (SK) eines Endgeräts (T1, T2,...) abgeschaltet sind, und beim weiteren Betriebszustand als drittem Betriebszustand noch mehr Systemkomponenten (SK) abgeschaltet sind, deren Reaktivierung länger dauert als im zweiten Betriebszustand.

3. Verfahren nach Anspruch 1 oder 2, **dadurch gekennzeichnet, daß** ein Endgerät (T1, T2, ...), das in den zweiten oder dritten Betriebszustand übergehen möchte, der Zentrale (ZE) eine entsprechende Mitteilung macht und der Zentrale (ZE) auch mitteilt, wann es sich wieder melden wird.

4. Verfahren nach Anspruch 3, **dadurch gekennzeichnet, daß** der Übergang vom ersten in den zweiten oder dritten Betriebszustand oder vom zweiten in den dritten Betriebszustand erst durchgeführt wird, wenn von der Zentrale (ZE) eine Bestätigung empfangen wird.

5. Verfahren nach einem der Ansprüche 1 bis 4, **dadurch gekennzeichnet, daß** die Zeitspanne, für die ein Endgerät (T1, T2,...) in die zweite oder dritte Betriebsphase übergeht, zwischen der Zentrale (ZE) und dem entsprechenden Endgerät (T1, T2,...) insbesondere in Abhängigkeit der Verkehrsparameter der Verbindungen ausgehandelt wird.

6. Verfahren nach einem der Ansprüche 1 bis 5, **dadurch gekennzeichnet, daß** die Zeiten, in denen die Endgeräte (T1, T2,...) den Ankündigungskanal (AC) abhören, von der Zentrale (ZE) entweder fest vorgegeben werden oder von den Endgeräten (T1, T2,...) zur Zentrale (ZE) gemeldet werden und von dort bestätigt werden.

7. Verfahren nach einem der Ansprüche 1 bis 6, **dadurch gekennzeichnet, daß** ein Übergang von dem weiteren bzw. zweiten oder dritten Betriebszustand in den ersten Betriebszustand dann vorgenommen wird, wenn die Zentrale (ZE) dem entsprechenden Endgerät (T1, T2,...) mitteilt, daß es Datenpakete für das Endgerät (T1, T2,...) hat, wobei die Zentrale (ZE) dem Endgerät auch mitteilt, wann diese Datenpakete zu empfangen sind.

8. Verfahren nach einem der Ansprüche 1 bis 6, **dadurch gekennzeichnet, daß** ein Übergang von dem weiteren bzw. zweiten oder dritten in den ersten Betriebszustand dann vorgenommen wird, wenn ein Endgerät (T1, T2,...) selbst ein oder mehrere Datenpakete an die Zentrale (ZE) senden möchte, wobei dieses Endgerät (T1, T2,...) auf den Rückkanal (RC) zugreift und der Zentrale (ZE) mitteilt, daß es in den ersten Betriebszustand übergehen möchte und etwas zu übertragen hat, und wobei die Zentrale (ZE) den Betriebszustandsübergang im Ankündigungskanal (AC) bestätigt und dem Endgerät (T1, T2,...) mitteilt, wann es senden darf.

9. Verfahren nach einem der Ansprüche 2 bis 6, **dadurch gekennzeichnet, daß** der Übergang vom zweiten in den dritten Betriebszustand dann vorgenommen wird, wenn ein Endgerät (T1, T2,...) längere Zeit im zweiten Betriebszustand war und die Verkehrscharakteristik dies zuläßt, wobei dieses Endgerät (T1, T2,...) der Zentrale (ZE) mitteilt, in welchen Abständen es den Ankündigungskanal (AC) abhört und der Übergang erst nach Bestätigung durch die Zentrale (ZE) vorgenommen wird.

10. Verfahren nach einem der Ansprüche 1 bis 9, **dadurch gekennzeichnet, daß** für den Übergang vom weiteren bzw. dritten in den ersten Betriebszustand eine feste Aufwachzeit vereinbart wird, nach der die Zentrale (ZE) dem entsprechenden Endgerät (T1, T2,...) im Ankündigungskanal (AC) Kapazität zuweist oder, daß sich das Endgerät (T1, T2,...) nach dem Aufwachen im Rückkanal (RC) bei der Zentrale (ZE) zurückmeldet.

11. Verfahren nach einem der Ansprüche 1 bis 10, **dadurch gekennzeichnet, daß** die Detektion eines Rahmensymbols, welches vorzugsweise zu Beginn eines Rahmens gesendet wird, unabhängig von der übrigen Signalverarbeitung detektiert wird.

12. Verfahren nach einem der Ansprüche 1 bis 11, **dadurch gekennzeichnet, daß** der Übergang vom weiteren bzw. zweiten oder dritten in den ersten Betriebszustand durch Versenden einer Marke, insbesondere einer 1-bit Information, ähnlich dem Ankündigungskanal (AC) vorgenommen wird, wobei sich diese Marke in der Form von der Marke, die zum Ankündigungskanal (AC) gehört, unterscheidet.

13. Verfahren nach einem der Ansprüche 1 bis 12, **dadurch gekennzeichnet, daß** die Synchroninformationen/Rahmensymbole auch dazu benutzt werden Nachrichten an die Endgeräte (T1, T2,...), insbesondere an jene Endgeräte im weiteren bzw. zweiten und/oder dritten Betriebszustand, zu senden.

14. Verfahren nach Anspruch 12 oder 13, **dadurch gekennzeichnet, daß** zur Übertragung von Nachrichten, insbesondere 1-Bit-Informationen, die Synchroninformationen/Rahmensymbole invertiert werden.

15. Verfahren nach Anspruch 13 oder 14, **dadurch gekennzeichnet, daß** die Nachrichten in den Synchroninformationen/Rahmensymbolen aus Aufwecksymbolen für die Endgeräte (T1, T2,...) insbesondere im weiteren bzw. zweiten und/oder dritten Betriebszustand bestehen, wobei eine Signalinversion insbesondere für jeden neuen Aufweckvorgang durchgeführt wird.

16. Verfahren nach einem der Ansprüche 1 bis 15, **dadurch gekennzeichnet, daß** die Zeiten, für die ein Endgerät im weiteren bzw. zweiten oder dritten Betriebszustand verbleiben möchte, der Zentrale (ZE) mitgeteilt werden oder festgelegt wird, daß ein Endgerät auf einen wahlfreien Zugriffskanal zugreift, sobald es betriebsbereit ist.

17. Verfahren nach einem der Ansprüche 1 bis 16, **dadurch gekennzeichnet, daß** die Aufweckzeiten, d.h. die Zeiten, die ein Endgerät zum Übergang in die Aktivphase benötigt, der Zentrale (ZE) mitgeteilt werden, insbesondere während der Aushandlung der Schlafphase oder während der Assoziierung des Endgerätes.

18. Verfahren nach einem der Ansprüche 1 bis 16, **dadurch gekennzeichnet, daß** die Aufweckzeiten, d.h. die Zeiten, die ein Endgerät zum Übergang in die Aktivphase benötigt, in Abhängigkeit von den Schlafphasen als Systemparameter festgelegt werden.

19. Verfahren nach einem der Ansprüche 1 bis 18, **dadurch gekennzeichnet, daß** für den Fall, daß Endgeräte ausschließlich durch Aufwecksymbole reaktiviert werden, eine Übertragung der Dauer der Schlafphasen unterbleibt und die Aufwecksymbole dann gesendet werden, wenn Daten für ein Endgerät vorliegen.

20. Verfahren nach einem der Ansprüche 1 bis 19, **dadurch gekennzeichnet, daß** die Dauer der Schlafphasen dynamisch an das Nutzerverhalten angepasst werden oder in Abhängigkeit von Nutzervorgaben eingestellt werden.

21. Verfahren nach Anspruch 20, **dadurch gekennzeichnet, daß** die Schlafphasen sukzessive verlängert werden, wenn ein Endgerät nur noch sporadisch benutzt wird oder schon längere Zeit nicht mehr benutzt wurde, wobei eine Verlängerung insbesondere so definiert wird, daß der Verlauf der Schlafphasen über der Zeit in Summe eine Erhöhung aufweist.

22. Verfahren nach Anspruch 20 oder 21, **dadurch gekennzeichnet, daß** die Schlafphasen zugunsten einer längeren Batterielebensdauer der Endgeräte verlängert werden.

23. Verfahren nach einem der Ansprüche 1 bis 22, **dadurch gekennzeichnet, daß** insbesondere bei Betrieb mit annähernd konstanter Datenrate der Übergang in eine Schlafphase ohne Signalisierung erfolgt und ein Übergang in eine Aktivphase ohne vorherige Auswertung eines Aufwecksymbols vorgenommen wird.

24. Verfahren nach einem der Ansprüche 1 bis 23, **dadurch gekennzeichnet, daß** zur Verringerung des Signalisierungsaufwandes burstartiger Datenverkehr über der Zeit verteilt wird.

25. Verfahren nach einem der Ansprüche 1 bis 24, **dadurch gekennzeichnet, daß** Endgeräte (T1, T2,...) in verschiedene Kategorien eingeteilt werden und daß die Zentrale (ZE) den Endgeräten (T1, T2...) einer Kategorie jeweils mitteilt jeden wievielten Übertragungsrahmen ein Endgerät abhören soll.

26. Verfahren nach einem der Ansprüche 1 bis 24, **dadurch gekennzeichnet, daß** Endgeräte (T1, T2,...) in verschiedene Kategorien eingeteilt werden und daß die Zentrale (ZE) in Abhängigkeit der Kategorie verschiedene Dienstegüten zuteilt.

27. Anordnung zum stromsparenden Betrieb eines Kommunikationsendgerätes (T1, T2,...) für insbesondere ein drahtloses Kommunikationssystem mit Paketvermittlung mit folgenden Merkmalen:
- einem Entscheider (ES), mittels dessen die zeitliche Synchronisation des Endgerätes (T1, T2,...) in Bezug auf die von einer Zentrale (ZE) empfangene Synchroninformation/Rahmensymbole steuerbar ist und welcher die Steuerung des Endgerätes (T1, T2,...) von der eigentlichen Steuerung (ST) des Endgerätes (T1, T2,...) übernimmt, wenn das Endgerät (T1, T2,...) von einem aktiven ersten Betriebszustand in einen weiteren bzw. zweiten oder dritten Betriebszustand, beispielsweise eine Bereitschaftsphase oder Schlafphase, übergeht,
- einer Zeitgebereinrichtung (Z1, Z2), die vom Entscheider (ES) aus steuerbar ist und die ein zeitliches Fenster für den Empfang der Synchroninformation/Rahmensymbole öffnet, wenn eine solche zu erwarten ist, wobei eine empfangene Synchroninformation dazu verwendbar ist, die Zeitbasis des Endgerätes (T1, T2,...) zu korrigieren,
- einem Zähler, der das Auftreten von Ankündigungen in einem Ankündigungskanal (AC), auf den das Endgeräte (T1, T2,...) Zugriff hat, zählt und in Abhangigkeit der gezählten Ankündigungen prüft, ob das Endgerät (T1, T2,...) den Ankündigungskanal (AC) abhören muß und dazu benötigte Systemkomponenten (SK) aktivieren muß.

28. Anordnung nach Anspruch 27, **dadurch gekennzeichnet, daß** der Zähler (NAC) bei Nichtübereinstimmung der gezählten Ankündigungen mit einem vorgegebenen Zählerstand rücksetzbar ist und bewirkt, daß das Endgerät (T1, T2,...) weiter in einem weiteren bzw. zweiten oder dritten Betriebszustand verbleiben kann, und daß bei Übereinstimmung der gezählten Ankündigungen mit vorgegebenem Zählerstand ein Steuersignal vom Entscheider (ES) zur eigentlichen Steuerung (ST) des Endgerätes (T1, T2,...) übertragbar ist, welches bewirkt, daß Systemkomponenten (SK) zum Empfang von Ankündigungen auf dem Ankündigungskanal (AC) aktivierbar sind und die Ankündigungen auswertbar sind.

29. Anordnung nach einem der Ansprüche 27 bis 28, **dadurch gekennzeichnet, daß** bei nichtgelungener Detektion der Synchroninformation/Rahmensymbole der Zeittakt der Zeitgebereinrichtung (Z1, Z2) selbst für Synchronzwecke auswertbar ist.

30. Anordnung nach einem der Ansprüche 27 bis 29, **dadurch gekennzeichnet, daß** für eine Korrektur der Zeitbasis eines Endgerätes (T1, T2,...) mehrere empfangene Synchroninformationen/Rahmensymbole zeitlich gemittelt werden und aus dieser Mittelung die Korrektur für die Zeitbasis des Endgerätes (T1, T2,...) aufbereitbar ist.

31. Anordnung nach einem der Ansprüche 27 bis 30, **dadurch gekennzeichnet, daß** Detektionseinrichtungen sowohl für normale Synchroninformationen/Rahmensymbole als auch für invertierte Synchroninformationen/Rahmensymbole vorgesehen sind.

## Claims

1. Method for a power-saving operating mode for communications terminals in an, in particular, wire-free communications system with packet switching having a control centre (ZE) which may itself be a terminal and which emits messages for the terminals (T1, T2, ...) on a frame-structured announcement channel (AC) and receives messages from the terminals (T1, T2, ...) on a return channel (RC), having the following steps:
- the terminals (T1, T2, ...) are assigned at least two operating states, wherein a first operating state defines an active phase in which a terminal (T1, T2, ...) monitors any announcement on the announcement channel (AC), and wherein a further operating state defines a sleep phase in which the announcement channel (AC) is monitored only at intervals,
- synchronizing information, for example frame symbols, are emitted by the control centre (ZE) for synchronization purposes of the terminals (T1, T2, ...),
- the terminals (T1, T2, ...) also evaluate the synchronization information/frame symbols at least at time intervals in the further operating state/states in order to correct their time base.

2. Method according to Claim 1, **characterized in that** a second operating state defines a stand-by phase in which the announcement channel (AC) is monitored periodically in previously defined time windows, wherein a number of system components (SK) of a terminal (T1, T2, ...) are switched off and in the further operating state as a third operating state even more system components (SK) are switched off and their reactivation takes longer than in the second operating state.

3. Method according to Claim 1 or 2, **characterized in that** a terminal (T1, T2, ...) which would like to change into the second or third operating state sends the control centre (ZE) a corresponding message and also informs the control centre (ZE) when it will communicate again.

4. Method according to Claim 3, **characterized in that** the change from the first operating state into the second or third operating state or from the second operating state into the third operating state is not carried out until a confirmation is received by the control centre (ZE).

5. Method according to one of Claims 1 to 4, **characterized in that** the time period for which a terminal (T1, T2, ...) changes into the second or third operating state is negotiated between the control centre (ZE) and the corresponding terminal (T1, T2, ...), in particular as a function of the traffic parameters of the connections.

6. Method according to one of Claims 1 to 5, **characterized in that** the times in which the terminals (T1, T2, ...) monitor the announcement channel (AC) are either permanently predefined by the control centre (ZE) or are signalled to the control centre (ZE) by the terminals (T1, T2, ...) and confirmed from there.

7. Method according to one of Claims 1 to 6, **characterized in that** a change from the further or second or third operating state into the first operating state is performed if the control centre (ZE) informs the corresponding terminal (T1, T2, ...) that it has data packets for the terminal (T1, T2, ...), wherein the control centre (ZE) also informs the terminal when these data packets are to be received.

8. Method according to one of Claims 1 to 6, **characterized in that** a change from the further or second or third operating state into the first operating state is performed when a terminal (T1, T2, ...) itself would like to transmit one or more data packets to the control centre (ZE), wherein this terminal (T1, T2, ...) accesses the return channel (RC) and informs the control centre (ZE) that it would like to change into the first operating state and has something to transmit, and wherein the control centre (ZE) confirms the change in operating state on the announcement channel (AC) and informs the terminal (T1, T2, ...) when it may transmit.

9. Method according to one of Claims 2 to 6, **characterized in that** the change from the second operating state into the third operating state is performed when a terminal (T1, T2, ...) was in the second operating state for a relatively long time and the traffic characteristic permits this, wherein this terminal (T1, T2, ...) informs the control centre (ZE) at which intervals it monitors the announcement channel (AC) and the change is not performed until after confirmation by the control centre (ZE).

10. Method according to one of Claims 1 to 9, **characterized in that**, for the change from the further or third operating state into the first operating state, a fixed wakeup time is agreed after which the control centre (ZE) assigns the corresponding terminal (T1, T2, ...) capacity on the announcement channel (AC), or **in that** the terminal (T1, T2, ...) sends an acknowledgement to the control centre (ZE) on the return channel (RC) after waking up.

11. Method according to one of Claims 1 to 10, **characterized in that** the detection of a frame symbol which is preferably transmitted at the start of a frame is detected independently of the rest of the signal processing.

12. Method according to one of Claims 1 to 11, **characterized in that** the change from the further or second or third operating state into the first operating state is performed by transmitting a mark, in particular a one-bit information item, similar to the announcement channel (AC), wherein this mark differs in form from the mark which is associated with the announcement channel (AC).

13. Method according to one of Claims 1 to 12, **characterized in that** the synchronizing information/frame symbols are also used to transmit messages to the terminals (T1, T2, ...), in particular to those terminals in the further or second and/or third operating states.

14. Method according to Claim 12 or 13, **characterized in that** the synchronizing information/frame symbols are inverted for the transmission of messages, in particular one-bit information items.

15. Method according to Claim 13 or 14, **characterized in that** the messages in the synchronizing information/frame symbols are composed of wakeup symbols for the terminals (T1, T2, ...), in particular in the further or second and/or third operating states, wherein signal inversion is carried out, in particular for each new wakeup process.

16. Method according to one of Claims 1 to 15, **characterized in that** the times for which a terminal would like to stay in the further or second or third operating state are signalled to the control centre (ZE) or it is defined that a terminal accesses an optional access channel as soon as it is ready to operate.

17. Method according to one of Claims 1 to 16, **characterized in that** the wakeup times, i.e. the times which a terminal needs to change into the active phase, are signalled to the control centre (ZE), in particular during the negotiation of the sleep phase or during the association of the terminal.

18. Method according to one of Claims 1 to 16, **characterized in that** the wakeup times, i.e. the times which a terminal needs to change into the active phase, are defined as a function of the sleep phases as system parameters.

19. Method according to one of Claims 1 to 18, **characterized in that** if terminals are reactivated exclusively by means of wakeup symbols, the length of the sleep phases is not transmitted and the wakeup symbols are transmitted when data is present for a terminal.

20. Method according to one of Claims 1 to 19, **characterized in that** the length of the sleep phases is adapted dynamically to the user behaviour or is set as a function of values predefined by users.

21. Method according to Claim 20, **characterized in that** the sleep phases are prolonged successively if a terminal is only used sporadically or has no longer been used for a relatively long time, wherein prolongation is defined in particular in such a way that the profile of the sleep phases over time increases in sum.

22. Method according to Claim 20 or 21, **characterized in that** the sleep phases are prolonged for the sake of a longer battery life of the terminals.

23. Method according to one of Claims 1 to 22, **characterized in that** the change into a sleep phase takes place without signalling, in particular when operating with an approximately constant data rate, and a change into an active phase is performed without previous evaluation of a wakeup symbol.

24. Method according to one of Claims 1 to 23, **characterized in that** burst-like data traffic is distributed over time in order to reduce the signalling work.

25. Method according to one of Claims 1 to 24, **characterized in that** terminals (T1, T2, ...) are divided into various categories, and **in that** the control centre (ZE) respectively informs the terminals (T1, T2, ...) of a category of the number of the transmission frame which a terminal will monitor each time.

26. Method according to one of Claims 1 to 24, **characterized in that** terminals (T1, T2, ...) are divided into various categories, and **in that** the control centre (ZE) assigns various service quality levels as a function of the category.

27. Arrangement for a power-saving operating mode of a communications terminal (T1, T2, ...), in particular for a wire-free communication system with packet switching, having the following features:
- a decision element (ES) which can be used to control the synchronization over time of the terminal (T1, T2, ...) with respect to the synchronizing information/frame symbols received by a control centre (ZE) and which transfers the control of the terminal (T1, T2, ...) from the actual controller (ST) of the terminal (T1, T2, ...) if the terminal (T1, T2, ...) changes from an active, first operating state into a further or second or third operating state, for example a standby phase or sleep phase,
- a timer device (Z1, Z2) which can be controlled from the decision element (ES) and which opens a time window for the reception of the synchronizing information/frame symbols if one is to be expected, wherein a received synchronizing information item can be used to correct the time base of the terminal (T1, T2, ...),
- a counter which counts the occurrence of announcements on an announcement channel (AC) which the terminals (T1, T2, ...) can access, and checks, as a function of the counted announcements, whether the terminal (T1, T2, ...) must monitor the announcement channel (AC) and must activate system components (SK) which are required for that purpose.

28. Arrangement according to Claim 27, **characterized in that** when the counted announcements do not correspond to a predefined counter reading the counter (NAC) can be reset, and has the effect that the terminal (T1, T2, ...) may continue to remain in a further or second or third operating state, and that when the counted announcements correspond to a predefined counter reading a control signal can be transmitted from the decision element (ES) to the actual controller (ST) of the terminal (T1, T2, ...), which has the effect that system components (SK) for receiving announcements on the announcement channel (AC) can be activated and the announcements can be evaluated.

29. Arrangement according to one of Claims 27 to 28, **characterized in that** when the detection of the synchronizing information/frame symbols is not successful the timing clock of the timer device (Z1, Z2) can itself be evaluated for synchronization purposes.

30. Arrangement according to one of Claims 27 to 29, **characterized in that**, in order to correct the time base of a terminal (T1, T2, ...), a plurality of received synchronizing information items/frame symbols are averaged chronologically and the correction for the time base of the terminal (T1, T2, ...) can be prepared from this message.

31. Arrangement according to one of Claims 27 to 30, **characterized in that** detection devices are provided both for normal synchronizing information/frame symbols and for inverted synchronizing information/frame symbols.

## Revendications

1. Procédé pour faire fonctionner avec une faible consommation de courant des terminaux de communication dans un système de communication notamment sans fil avec commutation de paquets, comprenant une centrale (ZE) qui peut elle-même être un terminal et qui émet dans un canal d'avertissement (AC) des messages destinés aux terminaux (T1, T2...) et qui reçoit dans un canal de retour (RC) des messages provenant des terminaux (T1, T2...), ce procédé présentant les étapes suivantes :
- on affecte aux terminaux (T1, T2...) au moins deux états de fonctionnement, le premier définissant une phase active au cours de laquelle un terminal (T1, T2...) écoute chaque avertissement dans le canal d'avertissement, tandis que le second état de fonctionnement définit une phase de veille au cours de laquelle le canal d'avertissement (AC) n'est écouté que par intervalles,
- pour synchroniser les terminaux (T1, T2...), on émet par la centrale (ZE) des informations de synchronisation, comme par exemple des symboles de trame, et
- les terminaux (T1, T2...), au moins à certains intervalles de temps, évaluent les informations de synchronisation ou symboles de trame, également dans l'autre ou les autres états de fonctionnement, pour corriger leur base de temps.

2. Procédé selon la revendication 1,
**caractérisé en ce qu'**
un deuxième état de fonctionnement définit une phase d'attente dans laquelle le canal d'avertissement (AC) est écouté périodiquement à des fenêtres de temps définies à l'avance, quelques composants de système (SK) d'un terminal (T1, T2...) étant alors couplés et, dans un autre état de fonctionnement constituant le troisième état, on effectue en plus la coupure d'autres composants de système (SK) dont la réactivation est plus longue que dans le deuxième état de fonctionnement.

3. Procédé selon la revendication 1 ou 2,
**caractérisé en ce qu'**
un terminal (T1, T2...), qui pourrait passer au deuxième ou au troisième état de fonctionnement, envoie un message correspondant à la centrale (ZE) et fait savoir aussi à la centrale quand il l'informera à nouveau.

4. Procédé selon la revendication 3,
**caractérisé en ce que**
le passage du premier au deuxième ou troisième état de fonctionnement, ou du deuxième au troisième, a lieu seulement quand une confirmation a été reçue de la centrale.

5. Procédé selon une des revendications 1 à 4,
**caractérisé en ce que**
la durée pour laquelle un terminal (T1, T2...) passe à la deuxième ou à la troisième phase de fonctionnement, est négociée entre la centrale (ZE) et le terminal correspondant (T1, T2...), notamment en fonction des paramètres de trafic des liaisons.

6. Procédé selon une des revendications 1 à 5,
**caractérisé en ce que**
les temps, pendant lesquels les terminaux (T1, T2...) écoutent le canal d'avertissement (AC), sont soit prédéfinis fixement par la centrale (ZE), soit adressés par les terminaux (T1, T2...) à la centrale (ZE) qui en accuse réception.

7. Procédé selon une des revendications 1 à 6,
**caractérisé en ce qu'**
un passage du deuxième ou du troisième état de fonctionnement au premier état a lieu quand la centrale (ZE) informe le terminal correspondant (T1, T2...) qu'il détient des paquets de données pour le terminal (T1, T2...) et la centrale (ZE) indique également au terminal quand celui-ci doit recevoir ces paquets.

8. Procédé selon une des revendications 1 à 6,
**caractérisé en ce qu'**
un passage du deuxième ou troisième état de fonctionnement au premier a lieu quand un terminal (T1, T2...) doit envoyer lui-même un ou plusieurs paquets de données à la centrale (ZE), ce terminal accédant au canal de retour (RC) et informant la centrale (ZE) qu'il devrait passer au premier état de fonctionnement et qu'il a quelque chose à transmettre, la centrale (ZE) confirmant dans le canal d'avertissement le changement d'état et indiquant au terminal (T1, T2...) quand celui-ci doit effectuer son envoi.

9. Procédé selon une des revendications 2 à 6,
**caractérisé en ce que**
le passage du deuxième au troisième état de fonctionnement a lieu quand un terminal (T1, T2...) est resté assez longtemps dans le deuxième état de fonctionnement et si la caractéristique de trafic l'autorise, ce terminal informant la centrale (ZE) avec quel intervalle dans le temps il écoute le canal d'avertissement (AC), et le passage n'a lieu qu'après accusé de réception par la centrale (ZE).

10. Procédé selon une des revendications 1 à 9,
**caractérisé en ce que**
pour le passage du troisième au premier état de fonctionnement, un temps d'éveil fixe est convenu après lequel la centrale (ZE) attribue, dans le canal d'avertissement (AC), au terminal correspondant (T1, T2...) une capacité, ou bien le terminal (T1, T2...) après le temps d'éveil, informe en retour la centrale (ZE) par le canal de retour (RC).

11. Procédé selon une des revendications 1 à 10,
**caractérisé en ce que**
la détection d'un symbole de trame émis de préférence au début d'une trame, est effectuée indépendamment du reste du traitement du signal.

12. Procédé selon une des revendications 1 à 11,
**caractérisé en ce que**
le passage du deuxième ou troisième état de fonctionnement au premier est effectué par émission d'une marque, notamment une information à 1 bit analogue au canal d'avertissement (AC), cette marque se distinguant par sa forme de la marque qui appartient au canal d'avertissement (AC).

13. Procédé selon une des revendications 1 à 12,
**caractérisé en ce que**
les informations de synchronisation ou les symboles de trame sont également utilisés pour envoyer des messages aux terminaux (T1, T2...), notamment à ceux qui sont dans le deuxième ou le troisième état de fonctionnement.

14. Procédé selon la revendication 12 ou 13,
**caractérisé en ce que**
pour transmettre des messages, en particulier des informations à 1 bit, les informations de synchronisation ou les symboles de trame sont inversés.

15. Procédé selon la revendication 13 ou 14,
**caractérisé en ce que**
les messages dans les informations de synchronisation ou les symboles de trame sont constitués de symboles de réveil pour les terminaux (T1, T2...), notamment dans le deuxième et/ou le troisième état de fonctionnement, une inversion de signal ayant lieu notamment pour chaque nouvelle opération de réveil.

16. Procédé selon une des revendications 1 à 15,
**caractérisé en ce que**
les temps pendant lesquels un terminal devrait rester dans le deuxième ou le troisième état de fonctionnement, sont transmis à la centrale (ZE), ou bien il est établi qu'un terminal accède à un canal facultatif dès qu'il est prêt à fonctionner.

17. Procédé selon une des revendications 1 à 16,
**caractérisé en ce que**
les temps de réveil, c'est-à-dire les temps qui sont nécessaires à un terminal pour passer à la phase active, sont transmis à la centrale (ZE), notamment pendant la négociation de la phase de veille ou pendant l'association du terminal.

18. Procédé selon une des revendications 1 à 16,
**caractérisé en ce que**
les temps de réveil, c'est-à-dire les temps qui sont nécessaires à un terminal pour passer à la phase active, sont fixés en fonction des phases de veille, en tant que paramètres de système.

19. Procédé selon une des revendications 1 à 18,
**caractérisé en ce que**
dans le cas où des terminaux sont réactivés exclusivement par des symboles de réveil, la transmission de la durée des phases de veille est interrompue et les symboles de réveil sont envoyés quand sont présentes des données destinées à un terminal.

20. Procédé selon une des revendications 1 à 19,
**caractérisé en ce que**
les durées des phases de veille sont adaptées dynamiquement au comportement de l'utilisateur ou sont réglées en fonction de données fournies par celui-ci.

21. Procédé selon la revendication 20,
**caractérisé en ce que**
les phases de veille sont allongées successivement si un terminal n'est utilisé que de manière sporadique, ou s'il n'a pas été utilisé depuis assez longtemps, et une prolongation est notamment définie de manière que le déroulement des phases de veille présente globalement une augmentation.

22. Procédé selon la revendication 20 ou 21,
**caractérisé en ce que**
les phases de veille sont allongées au profit d'une durée de vie plus longue des batteries des terminaux.

23. Procédé selon une des revendications 1 à 22,
**caractérisé en ce que**
notamment, dans le cas d'un fonctionnement avec un taux de données à peu près constant, le passage à une phase de veille a lieu sans signalisation, et le passage à une phase active est réalisé sans évaluation préalable d'un symbole de réveil.

24. Procédé selon une des revendications 1 à 23,
**caractérisé en ce que**
pour réduire le coût de la signalisation, un trafic de données du genre rafale, est réparti dans le temps.

25. Procédé selon une des revendications 1 à 24,
**caractérisé en ce que**
les terminaux (T1, T2...) sont classés en différentes catégories et la centrale (ZE) fait savoir aux terminaux (T1, T2...) d'une catégorie, laquelle des trames de transmission doit écouter un terminal.

26. Procédé selon une des revendications 1 à 24,
**caractérisé en ce que**
les terminaux (T1, T2...) sont classés en différentes catégories et la centrale (ZE) attribue des qualités de service différentes en fonction de la catégorie.

27. Dispositif pour faire fonctionner, avec une faible consommation de courant, des terminaux de communication (T1, T2...) dans un système de communication, notamment sans fil, avec commutation de paquets, présentant les caractéristiques suivantes :
- un décideur (ES) au moyen duquel la synchronisation du terminal (T1, T2...) peut être commandée en se référant à l'information de synchronisation ou au symbole de trame reçu par une centrale (ZE) et qui reçoit la commande du terminal (T1, T2...) émise par la commande propre (ST) du terminal (T1, T2...) quand ce terminal passe d'un premier état actif de fonctionnement à un deuxième et à un troisième état de fonctionnement (par exemple une phase de préparation ou une phase de veille),
- une horloge (Z1, Z2) qui peut être commandée à partir du décideur (ES) et qui ouvre une fenêtre de temps pour recevoir l'information de synchronisation ou le symbole de trame, quand une telle information ou symbole doit être attendu, et en utilisant cette information reçue pour corriger la base de temps du terminal (T1, T2...),
- un compteur qui compte les avertissements apparaissant dans un canal (AC) auquel le terminal (T1, T2...) a accès, et en fonction de ce nombre, examine si le terminal (T1, T2...) doit écouter le canal (AC) et pour cela doit activer les composants de système (SK) nécessaires.

28. Dispositif selon la revendication 27,
**caractérisé en ce que**
le compteur (NAC), quand les avertissements comptés ne correspondent pas à un nombre prédéfini, est ramené à zéro, avec pour effet que le terminal (T1, T2...) peut continuer à rester dans un deuxième ou troisième état de fonctionnement, et en cas d'accord entre les avertissements comptés et l'état prédéfini du compteur, un signal de commande peut être transmis du décideur (ES) à la commande propre (ST) du terminal (T1, T2...) avec pour effet que les composants de système (SK) peuvent être activés pour recevoir des avertissements sur le canal d'avertissement (AC) et les exploiter.

29. Dispositif selon la revendication 27 ou 28,
**caractérisé en ce qu'**
en cas de non détection de l'information de synchronisation ou du symbole de trame, la cadence de l'horloge (Z1, Z2) peut être évaluée elle-même dans le but de synchronisation.

30. Dispositif selon une des revendications 27 à 29,
**caractérisé en ce que**
pour corriger la base de temps d'un terminal (T1, T2...), la moyenne dans le temps de plusieurs informations de synchronisation ou symboles de trame reçus est établie, et à partir de cette moyenne on peut traiter la correction de la base de temps du terminal (T1, T2...)

31. Dispositif selon une des revendications 27 à 30,
**caractérisé en ce que**
des dispositifs de détection sont prévus pour des informations de synchronisation ou des symboles de trame normaux et également pour des informations synchrones ou des symboles de trame inversés.
